# EUROPEAN PATENT APPLICATION

(11) **EP 2 308 940 A1**
(43) Date of publication of application: **13.04.2011**
(21) Application number: 09802896.2
(22) Date of filing: 24.07.2009
(51) Int. Cl.: C09J 201/10, C09J 7/02, C09J 167/00, C09J 171/00, G02B 5/02

(54) **ADHESIVE MATERIAL, PRESSURE-SENSITIVE ADHESIVE SHEET, AND USE THEREOF**

(30) Priority: 28.07.2008 JP 2008193830; 03.10.2008 JP 2008258750
(71) Applicant: Asahi Glass Company Limited, Chiyoda-ku Tokyo 100-8405 (JP)
(72) Inventor: YASUDA, Teruhiko, Tokyo 100-8405 (JP); SHIMOMA, Hitoshi, Tokyo 100-8405 (JP); SATO, Hisashi, Tokyo 100-8405 (JP)
(74) Representative: Hartz, Nikolai
(86) International application number: PCT/JP2009/063272
(87) International publication number: WO 2010/013653

(57) **Abstract**

To provide an adherence substance which has a low viscosity and good coatability, can be made solvent free, is less likely to undergo an increase in the adhesive strength with time and has good adhesion to an adherend while the adhesive strength is low, is excellent in removability and has a good wettability.

An adherence substance which is obtainable by curing a curable composition comprising a silyl group-containing polymer (S) represented by the formula (1) and which has a peel adhesive strength of at most 8 N/25mm: 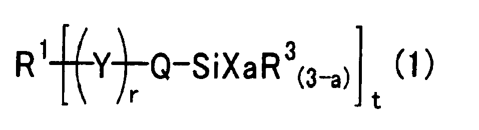 in the formula (1), R¹ represents a t-valent residue derived from a (mono)polyol; Q represents a bivalent group formed by a reaction of a terminal group selected from a hydroxy group, an amino group, an isocyanate group, an allyl group, an acryloyl group and a methacryloyl group, with a specific silyl compound; R³ represents a monovalent organic group; X represents a hydroxy group or a hydrolyzable group; Y represents a bivalent group containing an ester linkage or a bivalent group containing an ether linkage; a represents an integer of from 1 to 3; r represents an integer of from 1 to 1,000; and t represents an integer of from 1 to 8.

## Description

### TECHNICAL FIELD

The present invention relates to an adherence substance, a pressure sensitive adhesive sheet and its use

### BACKGROUND ART

An adhesive is required to adhere to an adherend so that it would hardly be peeled. On the other hand, a pressure sensitive adhesive is formed into a shape of a tape or the like and is required to exhibit good adhesion immediately upon lamination. At the same time, the pressure sensitive adhesive is required to have removability so that it can be peeled without leaving an adhesive deposit. While permanent adhesion is required for an adhesive, a pressure sensitive adhesive is required to have both temporary adhesion and removability. Thus, although an adhesive and a pressure sensitive adhesive are alike, they are fundamentally different in the required properties.

As conventional pressure sensitive adhesives, an acrylic pressure sensitive adhesive, a rubber pressure sensitive adhesive, a silicone pressure sensitive adhesive, an urethane pressure sensitive adhesive and an oxyalkylene pressure sensitive adhesive are known. Particularly, it has been a recent tendency that an acrylic pressure sensitive adhesive is used in a wide range of applications from a strongly adhesive pressure sensitive adhesive having a strong adhesive strength to a weakly adhesive pressure sensitive adhesive having a weak adhesive strength. However, an acrylic pressure sensitive adhesive has a problem of an odor or dermal irritation in a case where an acrylic monomer remains in the pressure sensitive adhesive. Further, an acrylic pressure sensitive adhesive is likely to undergo a change with time after being applied to an adherend, whereby the adhesive strength tends to increase, or migration tends to be high. Accordingly, there has been a problem such that an adhesive deposit is likely to remain on the adherend, and the removability tends to be inadequate.

In the case of a rubber pressure sensitive adhesive, it is necessary to add a low molecular weight plasticizer to adjust the adhesive performance or for handling efficiency. Therefore, there is a problem such that upon expiration of a long period of time, the low molecular weight plasticizer migrates to the surface, thus bringing about a remarkable deterioration of the performance.

A silicon pressure sensitive adhesive is excellent in heat resistance. However, it is expensive and is used only for special applications.

An urethane pressure sensitive adhesive has a characteristic such that it is excellent in stability with little change with time (Patent Document 1). However, its production process tends to be long, and as compared with an acrylic pressure sensitive adhesive, it tends to be expensive. Further, as the production process is long, there has been a problem that fluctuation in the quality is likely to result, or the process management tends to be cumbersome.

An oxyalkylene pressure sensitive adhesive has a characteristic such that it can be applied without using an organic solvent (Patent Documents 2 and 3). However, bleeding of an adhesion-imparting resin may sometimes occur, and there has been a problem from the viewpoint of the stability of the adhesive strength for a long period of time.

In recent years, a protective sheet or a protective tape has been frequently used during the production of electric components or electronic materials. The purpose is to protect such electric components or electronic materials from scratching or dusts in the process for production, transportation, storage, etc. Particularly, in the production of electronic components or optical materials, it is necessary to completely prevent fine dusts from attaching to a product during its production. Because, dusts will cause contamination and thus cause product failure. As such a protective sheet or a protective tape, a pressure sensitive adhesive sheet or a pressure sensitive adhesive tape provided with a pressure sensitive adhesive layer having a low adhesive strength, is employed.

### PRIOR ART DOCUMENTS

### PATENT DOCUMENTS

Patent Document 1: JP-A-2003-12751
Patent Document 2: WO2005/73333
Patent Document 3: WO2005/73334

### DISCLOSURE OF THE INVENTION

### PROBLEMS TO BE SOLVED BY THE INVENTION

A conventional pressure sensitive adhesive such as an acrylic pressure sensitive adhesive has had problems such that the adhesion and wettability to the substrate tend to be poor, and the adhesive strength tends to increase as the time passes. Particularly in a case where it is desired to produce a pressure sensitive adhesive having a weak adhesive strength, there has been a problem such that even if the composition of the pressure sensitive adhesive is adjusted so that the initial adhesive strength be low, the adhesive strength is likely to increase as the adhesion time becomes long. If the adhesive strength increases, the adherend is likely to be deformed and may possibly be broken. On the other hand, if the composition of the pressure sensitive adhesive is adjusted to make the adhesive strength to be low upon expiration of a certain time, there has been a problem that no adequate adhesive strength is obtainable even at the initial stage. If no adequate adhesive strength is obtainable, it is likely to be peeled from the adherend unintentionally, and it cannot perform a prescribed role as e.g. a protective sheet. Further, the thickness of the pressure sensitive adhesive layer may be made thin in order to control the increase of the adhesive strength. In such a case, the essential function of the pressure sensitive adhesive to adhere to the adherend under light pressure, is likely to be impaired.

In the Patent Document 1, at the time of producing a resin as a raw material for the disclosed urethane pressure sensitive adhesive, a slight difference in the reactivity of the raw material is utilized to obtain a polymer having a prescribed structure. However, in order to control the structure by the difference in the reactivity, it is necessary to control the reaction conditions precisely. Consequently, in the production of this resin, control of the molecular weight is difficult, and it was difficult to obtain a pressure sensitive adhesive having a desired performance. Particularly, it was difficult to control the formation of a high molecular weight product and the progress in gelation along with the formation. The molecular weight relates to molecular cohesion and influential over the adherence property and removability. Further, if the gelation proceeds too much, the obtainable composition tends to have a high viscosity. If the composition has a high viscosity, at the time of mold processing of the pressure sensitive adhesive, it tends to be difficult to obtain an adherence substance layer having a uniform prescribed thickness, or the surface of the obtained adherence substance is likely to be not smooth, and thus there has been a problem from the viewpoint of the production. Even if the apparent viscosity is lowered by means of a solvent, there will be a problem such that a thick adherence substance is hardly obtainable, bubbling is likely to result, or a long time is required for drying.

The present invention has been made in view of the above problems, and its object is to provide an adherence substance which has a low viscosity and good coatabilty, can be made solvent-free, is less likely to undergo an increase in the adhesive strength with time and has good adhesion to an adherend while the adhesive strength is low, is excellent in removability and has a good wettability.

### MEANS TO SOLVE THE PROBLEMS

[1] An adherence substance which is obtainable by curing a curable composition comprising a silyl group-containing polymer (S) represented by the following formula (1) and which has a peel adhesive strength of at most 8 N/25mm: 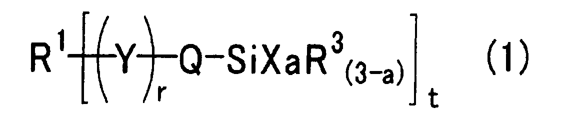 in the formula (1), R¹ represents a t-valent residue obtained by removing all hydroxy groups from a compound having t pieces of hydroxy groups in one molecule; Q represents a bivalent group represented by any one of the following formulae (Q1) to (Q10); R³ represents a monovalent organic group having from 1 to 20 carbon atoms; X represents a hydroxy group or a hydrolyzable group; Y represents a bivalent group represented by the following formula (A) or a bivalent group represented by the following formula (B); a represents an integer of from 1 to 3; r represents an integer of from 1 to 1,000; t represents an integer of from 1 to 8; when t is from 2 to 8, t pieces of monovalent groups (-(Y)ᵣ-Q-SiXₐR³₍₃₋ₐ₎) bonded to R¹ may be the same or different from one another; when a is 2 or 3, 2 or 3 pieces of X bonded to one silicon atom may be the same or different from one another; when a is 1, 2 pieces of R³ bonded to one silicon atom may be the same or different from each other; and when r is 2 or more, the plurality of Y bonded to one another, may be the same or different from one another;

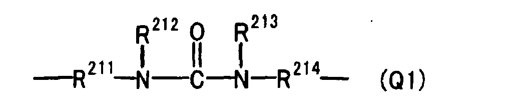

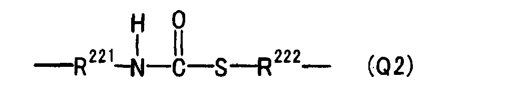

   -R²³¹-S-R²³²- (Q3)

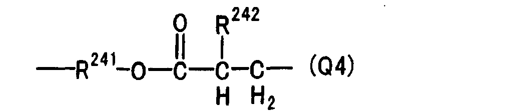

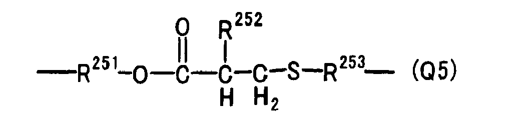

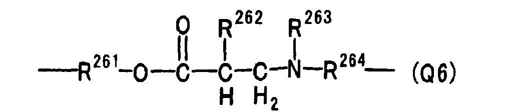

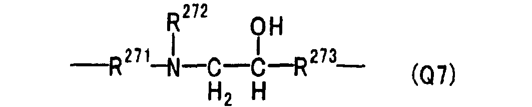

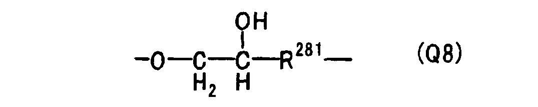

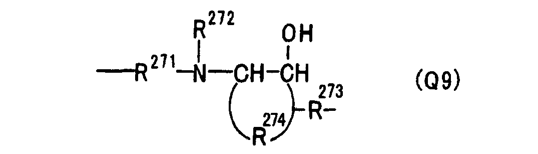

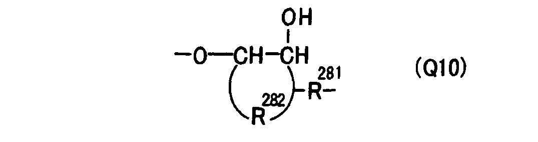

   in the formulae (Q1) to (Q10), each of R²¹¹, R²¹⁴, R²²¹, R²²², R²³¹, R²³², R²⁴¹, R²⁵¹, R²⁵³, R²⁶¹, R²⁶⁴, R²⁷¹, R²⁷³ and R²⁸¹ which are independent of one another, represents a single bond or a bivalent group, each of R²¹², R²¹³, R²⁶³ and R²⁷² which are independent of one another, represents a hydrogen atom or a monovalent organic group having from 1 to 8 carbon atoms, each of R²⁴², R²⁵² and R²⁶² which are independent of one another, represents a hydrogen atom or a methyl group, and each of R²⁷⁴ and R²⁸² which are independent of each other, represents a trivalent organic group;

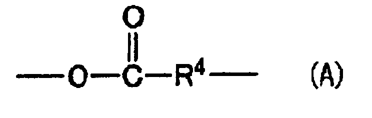

   -OR⁵- (B)

   in the formula (A), R⁴ represents an alkylene group having from 2 to 8 carbon atoms; and in the formula (B), R⁵ represents an alkylene group having from 2 to 4 carbon atoms.
[2] The adherence substance according to the above [1], wherein the curable composition comprises, as the silyl group-containing polymer (S), a polyester ether type silyl group-containing polymer (S1) which is represented by the above formula (1) wherein r is an integer of from 2 to 1,000, and Y is a bivalent group represented by the formula (A) and a bivalent group represented by the formula (B).
[3] The adherence substance according to the above [2], wherein the polyester ether type silyl group-containing polymer (S1) is a polymer obtainable via a first step of reacting an initiator (z) made of a compound having from 1 to 8 hydroxy groups in the molecule, a cyclic ester compound (a) having from 3 to 9 carbon atoms and an alkylene oxide (b) having from 2 to 4 carbon atoms in the presence of a polymerization catalyst to obtain a polyester ether poly(mono)ol (p1), a second step of introducing a connecting moiety to the terminal of the polyester ether poly(mono)ol (p1) to obtain a substituted polyester ether compound (p11), and a third step of reacting the substituted polyester ether compound (p11) with a silyl compound (I) to obtain the polyester ether type silyl group-containing polymer (S1).
[4] The adherence substance according to the above [3], wherein in the polyester ether type silyl group-containing polymer (S1), the mass ratio of the bivalent group represented by the formula (A) derived from the cyclic ester compound (a) to the bivalent group represented by the formula (B) derived from the alkylene oxide (b) i.e. (A):(B), is from 5:95 to 95:5.
[5] The adherence substance according to the above [3] or [4], wherein the initiator (z) is a polyoxyalkylene poly(mono)ol (z2) which has from 1 to 8 hydroxy groups in the molecule and which also has an oxyalkylene group, and the polyester ether type silyl group-containing polymer (S1) is a polymer represented by the following formula (2): 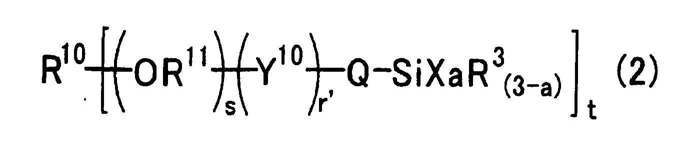 in the formula (2), R¹⁰ represents a t-valent hydrocarbon group having from 1 to 20 carbon atoms; R¹¹ represents an alkylene group having from 2 to 4 carbon atoms derived from the polyoxyalkylene poly(mono)ol (z2); Q represents a bivalent group represented by any one of the formulae (Q1) to (Q10); R³ represents a monovalent organic group having from 1 to 20 carbon atoms; X represents a hydroxy group or a hydrolyzable group; Y¹⁰ represents a bivalent group represented by the formula (A) derived from the cyclic ester compound (a) or a bivalent group represented by the formula (B) derived from the alkylene oxide (b), Y¹⁰ contains at least a bivalent group represented by the formula (A); a represents an integer of from 1 to 3; r' represents an integer of at least 1; s represents an integer of from 1 to 250; the sum of r' and s is an integer of from 2 to 1,000; t represents an integer of from 1 to 8; when t is from 2 to 8, t pieces of monovalent groups (-(OR¹¹)ₛ-(Y¹⁰)_{r'}-Q-SiXₐR³₍₃₋ₐ₎) bonded to R¹⁰ may be the same or different from one another; when a is 2 or 3, 2 or 3 pieces of X bonded to one silicon atom may be the same or different from one another; when a is 1, 2 pieces of R³ bonded to one silicon atom may be the same or different from each other; when r' is 2 or more, the plurality of Y¹⁰ bonded to one another, may be the same or different from one another; and when s is 2 or more, the plurality of -OR¹¹- bonded to one another, may be the same or different from one another.
[6] The adherence substance according to any one of the above [3] to [5], wherein the polyester ether poly(mono)ol (p1) has an average hydroxy value (OHV) of from 10 to 230 mgKOH/g.
[7] An adherence substance which is obtainable by curing a curable composition comprising a silyl group-containing polymer (S) represented by the formula (1).
[8] A pressure sensitive adhesive sheet comprising a substrate layer and at least one layer of an adherence substance, wherein the adherence substance is one as defined in any one of the above [1] to [7].
[9] A backgrind tape comprising a substrate layer and at least one layer of an adherence substance, wherein the adherence substance is one as defined in any one of the above [1] to [7].
[10] An optical element protective pressure sensitive adhesive sheet comprising a substrate layer and at least one layer of an adherence substance, wherein the adherence substance is one as defined in any one of the above [1] to [7].
[11] An optical element having the optical element protective pressure sensitive adhesive sheet as defined in the above [10] bonded thereon.
[12] A light diffusing plate comprising the optical element as defined in the above [11].
[13] A prism sheet comprising the optical element as defined in the above [11].

### EFFECTS OF THE INVENTION

According to the present invention, it is possible to obtain an adherence substance which has a low viscosity and good coatability, can be made solvent-free, is less likely to undergo an increase in the adhesive strength with time and has good adhesion to an adherend while the adhesive strength is low, is excellent in removability and has good wettability.

### BEST MODE FOR CARRYING OUT THE INVENTION

In this specification, the molecular weight distribution is a value obtained by dividing the mass average molecular weight (Mw) by the number average molecular weight (Mn). In this specification, the number average molecular weight (Mn), the mass average molecular weight (Mw) and the molecular weight distribution (Mw/Mn) are the molecular weight as calculated as polystyrene obtained by measurement by gel permeation chromatography employing a calibration curve prepared by using a standard polystyrene test sample having a known molecular weight.

In this specification, the average hydroxy value (OHV) is a value measured in accordance with JIS K-1557-6.4.

Further, in this specification, an adherence property is a property to adhere to an adherend under gentle pressure and to be optionally removable. Further, a pressure sensitive adhesive is a material which has the adherence property and adheres to an adherend under gentle pressure. However, the pressure sensitive adhesive has removability and is used for temporary adhesion. An adhesive is different from a pressure sensitive adhesive in that it has a permanent adhesive property.

Further, an adherence substance is a formed product having an adherence property. Further, a pressure sensitive adhesive sheet (which may simply be referred to as an adhesive sheet) is a sheet having an adherence property. However, in this specification, the thickness is not questioned, i.e. a sheet and a film are not distinguished. Usually, it is a laminate having at least a substrate layer and an adherence substance layer as constituting elements. Further, a pressure sensitive adhesive tape (which may simply be referred to as an adhesive tape) is a pressure sensitive adhesive sheet in the form of a tape.

Further, a polyol or monool may generally be referred to as a poly(mono)ol.

In this specification, pressure sensitive adhesives may sometimes be classified by the peel adhesive strength (peel strength from the adherend). A case where the peel adhesive strength exceeds 0 N/25 mm and at most 1 N/25 mm may be referred to as "weakly adhesive"; a case where the peel adhesive strength exceeds 1 N/25 mm and at most 8 N/25 mm as "low adhesive"; a case where the peel adhesive strength exceeds 8 N/25 mm and at most 15 N/25 mm as "moderately adhesive"; and a case where the peel adhesive strength exceeds 15 N/25 mm and at most 50 N/25 mm as "strongly adhesive". Unless otherwise specified, peel adhesive strength is in accordance with the following test method in accordance with the 180° peeling method as defined in JIS Z-0237(1999)-8.3.1.

That is, in an environment of 23°C, an adhesive sheet test piece to be measured (width: 25 mm) is adhered to a stainless steel plate (SU 304(JIS)) having a thickness of 1.5 mm and treated by bright annealing, and press-bonded by a rubber roll having a weight of 2 kg. 30 Minutes later, the peel strength (180° peeling, pulling speed: 300 mm/min) is measured by means of a tensile tester as defined in JIS B-7721. The value of the peel strength 30 minutes after adhesion thus obtained is regarded as the "peel adhesive strength" in the present invention.

### <SILYL GROUP-CONTAINING POLYMER (S)>

The adherence substance of the present invention is obtainable by curing a curable composition comprising a silyl group-containing polymer (S) represented by the above formula (1).

In this specification, among silyl group-containing polymers (S), one wherein r is 2 or more, and r pieces of Y are a bivalent group represented by the above formula (A) (hereinafter sometimes referred to as a bivalent group (A)) and a bivalent group represented by the above formula (B) (hereinafter sometimes referred to as a bivalent group (B)), is referred to as a polyester ether type silyl group-containing polymer (S1) (hereinafter sometimes referred to as a polyester ether type polymer (S1)).

Among silyl group-containing polymers (S), one wherein Y is only a bivalent group (B), is referred to as a polyether type silyl group-containing polymer (S2) (hereinafter sometimes referred to as a polyether type polymer (S2)), and one wherein Y is only a bivalent group (A), is referred to as a polyester type silyl group-containing polymer (S3) (hereinafter sometimes referred to as a polyester type polymer (S3))

The silyl group-containing polymer (S) contained in the curable composition of the present invention may be one type alone or a combination of two or more types, among the polyester ether type polymer (S1), the polyether type polymer (S2) and the polyester type polymer (S3). It preferably contains at least the polyester ether type polymer (S1).

### <POLYESTER ETHER TYPE SILYL GROUP-CONTAINING POLYMER (S1)>

In the above formula (1), R¹ is a t-valent residue obtained by removing all hydroxy groups from a monohydroxy compound or polyhydroxy compound having t pieces of hydroxy groups in one molecule.

R¹ is a residue derived from an initiator (z) used for the production of the polyester ether type polymer (S1). Such an initiator (z) is a monohydroxy compound or polyhydroxy compound having from 1 to 8 hydroxy groups. The initiator (z) will be described hereinafter.

R¹ is preferably a t-valent hydrocarbon group having from 1 to 20 carbon atoms, more preferably a t-valent hydrocarbon group having from 1 to 10 carbon atoms.

If t in the formula (1), i.e. the number of hydroxy groups in the initiator (z), exceeds 8, the viscosity of a polyester ether poly(mono)ol (p1) (hereinafter sometime referred to as a poly(mono)ol (p1)) as an intermediate for the polyester ether type polymer (S1) tends to be high in a case where the molecular weight per hydroxy group is equal. Further, the molecular weight distribution of the poly(mono)ol (p1) tends to be broad. Accordingly, the flexibility of a polyester ether type polymer (S1) obtainable by reacting a substituted polyester ether compound (p11) having an amino group, an isocyanate group, an allyl group, an acryloyl group or a methacryloyl group further introduced to the terminal of the poly(mono)ol (p1) with a silyl compound, or a polyester ether type polymer (S1) obtainable by reacting the poly(mono)ol (p1) with a silyl compound, tends to be impaired, and the adherence property tends to be low.

In a case where two or more compounds are used as initiators (z) to be used for the production of the polyester ether type polymer (S1), the average number of hydroxy groups per molecule i.e. the average value of t in the polyester ether type polymer (S1) is preferably from 1 to 8, more preferably from 1 to 5, further preferably from 1 to 3. When the average number of hydroxy groups is within the above range, the viscosity is low, whereby the production is easy, and a good curing speed and flexibility can be provided.

In the above formula (1), R³ is a monovalent organic group having from 1 to 20 carbon atoms, preferably a monovalent organic group having from 1 to 6 carbon atoms. Specifically, it may, for example, be a methyl group, an ethyl group, a propyl group, a butyl group or a pentyl group.

R³ may have a substituent. Such a substituent may, for example, be a methyl group or a phenyl group.

In a case where the polyester ether type polymer (S1) has a plurality of R³ in its molecule, such a plurality of R³ may be the same or different from one another. That is, when a is 1, each of two R³ bonded to one silicon atom (Si) independently represents a monovalent organic group having from 1 to 20 carbon atoms, which may have a substituent.

In the formula (1), X represents a hydroxy group (-OH) or a hydrolyzable group. The hydrolyzable group may, for example, be a -OR group (wherein R is a hydrocarbon group having at most 4 carbon atoms). Such a -OR group is preferably an alkoxy or alkenyloxy group having at most 4 carbon atoms. Specifically, it may, for example, be a methoxy group, an ethoxy group, a propoxy group or a propenyloxy group. Among them, a methoxy group or an ethoxy group is more preferred. In such a case, it is possible to further improve the curing speed of the polyester ether type polymer (S1).

In the polyester ether type polymer (S1), in a case where a plurality of X are present in its molecule, such a plurality of X may be the same or different from one another. That is, in the formula (1), when a is 2 or 3, and/or t is an integer of from 2 to 8, each of the plurality of X independently represents a hydroxy group or a hydrolyzable group.

Further, in the formula (1), a represents an integer of from 1 to 3. When t is an integer of from 2 to 8, each of the t pieces of a independently represents an integer of from 1 to 3. a is preferably 2 or 3, most preferably 3.

In the above formula (1), -SiXₐR³₍₃₋ₐ₎ is preferably a trimethoxysilyl group or a triethoxysilyl group, particularly preferably a trimethoxysilyl group, whereby the storage stability of the silyl group-containing polymer (S) will be good, and the curing speed of the curable composition will be high, such being preferred for the production of the adherence substance.

It is considered that in the present invention, a specific bonding group Q and the above silyl group are close to each other in the molecule, whereby a low adhesive strength of the adherence substance can be obtained, and the stability of the adhesive strength can be obtained.

In the formula (1), Q specifically represents a bonding group represented by any one of the above formulae (Q1) to (Q10). Hereinafter a group represented by the formula (Q1) will sometimes be referred to as a group (Q1). The same applies to the formulae (Q2) to (Q10).

### FORMULA [Q1]

In the above formula (Q1), each of R²¹¹ and R²¹⁴ which are independent of each other, represents a single bond or a bivalent group, and each of R²¹² and R²¹³ which are independent of each other, represents a hydrogen atom or a monovalent organic group having from 1 to 8 carbon atoms.

The bivalent group as R²¹¹ is preferably a bivalent organic group having from 2 to 30 carbon atoms, more preferably a bivalent organic group having from 2 to 25 carbon atoms. Particularly the bivalent group represented by R²¹¹ may have one or more polar groups. Such a polar group may be constituted by a bivalent hydrocarbon group such as a methylene group and a monovalent polar group such as a hydroxy group or an amino group bonded to the bivalent hydrocarbon group, or may be constituted by a bivalent polar group such as a urethane bond or a urea bond. It is particularly preferably constituted by a bivalent polar group, preferably constituted by a bivalent polar group having a nitrogen atom. For example, the hydroxy group terminal may be modified by a diisocyanate compound and further modified by a diamine compound to form a bivalent group represented by R²¹¹. In such a case, the bivalent group R²¹¹ has a urethane bond or a urea bond.

By the bivalent group R²¹¹ having a plurality of polar groups, the adhesive strength can be increased. This is considered to be because cohesion is increased by presence of a large number of polar groups in the vicinity of the terminal hydrolysable silyl group.

The bivalent group as R²¹⁴ is preferably a hydrocarbon group having from 2 to 10 carbon atoms, more preferably a hydrocarbon group having from 2 to 6 carbon atoms. It is particularly preferably a trimethylene group.

The monovalent organic group having from 1 to 8 carbon atoms as R²¹² and R²¹³ is preferably a linear, branched or cyclic monovalent hydrocarbon group having from 1 to 8 carbon atoms, and it is preferred that at least one of R²¹² and R²¹³ is a hydrogen atom.

The group (Q1) is formed by reacting the after-mentioned terminal amino group polyester ether compound (p11a) with silyl isocyanate compound (i). Otherwise, the group (Q1) is formed by reacting the after-mentioned terminal isocyanate group polyester ether compound (p11b) with silylamino compound (ii).

### FORMULA [Q2]

In the formula (Q2), each of R²²¹ and R²²² which are independent of each other, represents a single bond or a bivalent group.

R²²² is preferably a bivalent group.

The bivalent group as R²²¹ is preferably a bivalent organic group having from 2 to 30 carbon atoms, more preferably a bivalent organic group having from 2 to 20 carbon atoms. Particularly the bivalent group represented by R²²¹ may have a polar group. Such a polar group may be constituted by a bivalent hydrocarbon group such as a methylene group and a monovalent polar group such as a hydroxy group or an amino group bonded to the bivalent hydrocarbon group, or may be constituted by a bivalent polar group such as a urethane bond or a urea bond. It is particularly preferably constituted by a bivalent polar group, preferably constituted by a bivalent polar group having a nitrogen atom. For example, the hydroxy group terminal may be modified by a diisocyanate compound to form a bivalent group represented by R²²¹.

In such a case, the bivalent group R²²¹ has a urethane bond.

The bivalent group as R²²² is preferably a trimethylene group, a tetramethylene group (butylene group) or a pentamethylene group (pentylene group), more preferably a trimethylene group or a tetramethylene group. It is particularly preferably a trimethylene group.

The group (Q2) is formed by reacting the after-mentioned terminal isocyanate group polyester ether compound (p11b) with silylmercapto compound (iii).

### FORMULA [Q3]

In the above formula (Q3), R²³¹ and R²³² which are independent of each other, represents a single bond or a bivalent group.

R²³² is preferably a bivalent group.

The bivalent group as R²³¹ is preferably a bivalent organic group having from 2 to 10 carbon atoms, more preferably a hydrocarbon group having from 2 to 6 carbon atoms. It is particularly preferably a trimethylene group.

R²³² is the same as R²²² including the preferred embodiments.

The group (Q3) is formed by reacting the after-mentioned terminal allyl group polyester ether compound (p11c) with the silylmercapto compound (iii).

### FORMULA [Q4]

In the formula (Q4), R²⁴¹ represents a single bond or a bivalent group. R²⁴² represents a hydrogen atom or a methyl group.

The bivalent group as R²⁴¹ is preferably a bivalent organic group having from 2 to 20 carbon atoms, more preferably a bivalent organic group having from 2 to 15 carbon atoms. Particularly the bivalent group represented by R²²¹ may have a polar group. Such a polar group may be constituted by a bivalent hydrocarbon group such as a methylene group and a monovalent polar group such as a hydroxy group or an amino group bonded to the bivalent hydrocarbon group, or may be constituted by a bivalent polar group such as a urethane bond or a urea bond. It is particularly preferably constituted by a bivalent polar group, preferably constituted by a bivalent polar group having a nitrogen atom. For example, the hydroxy group terminal may be modified by a diisocyanate compound, followed by reaction with an acrylic compound having an active hydrogen atom (hydroxy group) such as a hydroxyalkyl acrylate or a hydroxyalkyl methacrylate, to form a bivalent group represented by R²⁴¹. In such a case, the bivalent group R²⁴¹ has a urethane bond. Otherwise, for example, the hydroxy group terminal may be modified by a diisocyanate compound, followed by reaction with an acrylic compound having an active hydrogen atom (carboxylic acid) such as acrylic acid or methacrylic acid, to form a bivalent group represented by R²⁴¹.

Further, an acrylic compound having a carboxylic acid such as acrylic acid or methacrylic acid may be reacted with the hydroxy group to form the group (Q4). In such a case, R²⁴¹ is a single bond.

The group (Q4) is formed by reacting the after-mentioned terminal acryloyl group (or methacryloyl group) polyester ether polyol (p11d) with silylhydro compound (iv).

### FORMULA [Q5]

In the formula (Q5), each of R²⁵¹ and R²⁵³ which are independent of each other, represents a single bond or a bivalent group.

R²⁵² represents a hydrogen atom or a methyl group.

R²⁵¹ is the same as R²⁴¹ including the preferred embodiments.

R²⁵³ is the same as R²²² including the preferred embodiments.

The group (Q5) is formed by reacting the terminal acryloyl group (or methacryloyl group) polyester ether polyol (p11d) with a silylmercapto compound (iii).

### FORMULA [Q6]

In the formula (Q6), each of R²⁶¹ and R²⁶⁴ which are independent of each other, represents a single bond or a bivalent group.

R²⁶² represents a hydrogen atom or a methyl group.

R²⁶³ represents a hydrogen atom or a monovalent organic group having from 1 to 8 carbon atoms.

R²⁶¹ is the same as R²⁴¹ including the preferred embodiments.

R²⁶³ is the same as R²¹³ including the preferred embodiments.

R²⁶⁴ is the same as R²¹⁴ including the preferred embodiments.

The group (Q6) is formed by reacting the terminal acryloyl group (or methacryloyl group) polyester ether polyol (p11d) with the silylamino compound (ii).

### FORMULAE [Q7] AND [Q9]

In the formulae (Q7) and (Q9), each of R²⁷¹ and R²⁷³ which are independent of each other, represents a single bond or a bivalent group. R²⁷² represents a hydrogen atom or a monovalent organic group having from 1 to 8 carbon atoms. R²⁷⁴ represents a trivalent organic group.

R²⁷¹ is the same as R²¹¹ including the preferred embodiments.

R²⁷² is the same as R²¹² including the preferred embodiments.

The bivalent group as R²⁷³ is preferably a bivalent group obtained by removing one hydrogen atom from a linear, branched or cyclic monovalent hydrocarbon group having from 1 to 8 carbon atoms, more preferably a trimethylene group.

The trivalent organic group as R²⁷⁴ is preferably a trivalent hydrocarbon group obtained by removing a hydrogen atom bonded to a non-terminal carbon atom of a linear alkylene group having from 3 to 5 carbon atoms, particularly preferably a 1,2,4-butanetriyl group.

The group (Q7) is formed by reacting the after-mentioned terminal amino group polyester ether compound (p11a) with silylepoxy compound (v).

The group (Q9) is formed by reacting the after-mentioned terminal amino group polyester ether compound (p11a) with silylepoxy compound (v').

### FORMULAE [Q8] AND [Q10]

In the above formulae (Q8) and (Q10), R²⁸¹ represents a single bond or a bivalent group. R²⁸² represents a trivalent organic group.

R²⁸¹ is the same as R²⁷³ including the preferred embodiments.

R²⁸² is the same as R²⁷⁴ including the preferred embodiments.

The group (Q8) is formed by reacting the polyester ether poly(mono)ol (p1) with the after-mentioned silylepoxy compound (v).

The group (Q10) is formed by reacting the polyester ether poly(mono)ol (p1) with the after-mentioned silylepoxy compound (v').

In the above formula (1), Y represents a bivalent group (A) or a bivalent group (B).

Specifically, in a case where a first initiator (z1) made of a poly(mono)ol having no oxyalkylene group is used as the initiator (z), the bivalent group (A) is a group derived from a cyclic ester compound (a) used for the production of the poly(mono)ol (p1) as an intermediate, and the bivalent group (B) is a group derived from an alkylene oxide (b) used for the production of the poly(mono)ol (p1). In a case where a second initiator (z2) made of a polyoxyalkylene poly(mono)ol having an oxyalkylene group is used as the initiator (z), Y in the above formula (1) contains also a bivalent group (B) derived from such an initiator (z2). The cyclic ester compound (a), the alkylene oxide (b), the first initiator (z1) and the second initiator (z2) will be described hereinafter.

In a case where the silyl group-containing polymer (S) has a plurality of Y in its molecule, such a plurality of Y may be the same or different from one another. That is, when r is an integer of from 2 to 1,000 and/or when t is an integer of from 2 to 8, each of Y independently is a bivalent group (A) or a bivalent group (B).

In the above formula (1), r represents an integer of from 1 to 1,000. This r is preferably an integer of from 10 to 500, more preferably an integer of from 20 to 200. Here, when t is from 2 to 8, each r independently represents an integer of from 1 to 1,000.

In the above formula (A), R⁴ represents an alkylene group having from 2 to 8 carbon atoms. In order to make sure that the melting point will not be too high, R⁴ is preferably an alkylene group having from 2 to 5 carbon atoms, and among them, it is more preferably a linear saturated hydrocarbon chain. In a case where the silyl group-containing polymer (S) has a plurality of bivalent groups (A) in its molecule, a plurality of R⁴ in the plurality of bivalent groups (A) may be the same or different. R⁴ is most preferably a pentamethylene group (n-pentylene group).

In the above formula (B), R⁵ represents an alkylene group having from 2 to 4 carbon atoms. From the viewpoint of the viscosity of the silyl group-containing polymer (S), R⁵ is preferably an ethylene group and/or a propylene group, more preferably only a propylene group. In a case where the silyl group-containing polymer (S) has a plurality of bivalent groups (B) in its molecule, a plurality of R⁵ in the plurality of bivalent groups (B) may be the same or different from one another.

In the polyester ether type polymer (S1), a copolymer chain of the bivalent group (A) and bivalent group (B), constituting the polyester ether chain represented by -(Y-)ᵣ, may be a random copolymer chain or a block copolymer chain, and both the random copolymer chain and the block copolymer chain may be present in one molecule. Further, in a case where t is 2 or more and a plurality of polyester ether chains are present in the molecule, the sequential order of the bivalent group (A) and the bivalent group (B) in such a plurality of polyester ether chains may be the same or different. Such copolymer chains of the bivalent group (A) and the bivalent group (B) preferably have random copolymer chains, and it is preferred that both a random copolymer chain and a block copolymer chain are present in one molecule.

In the polyester ether type polymer (S1), the mass ratio of the bivalent group (A) and the bivalent group (B) i.e. (A):(B) is preferably from 5:95 to 95:5. A more preferred range is from 30:70 to 70:30. A particularly preferred range is from 30:70 to 60:40. When the ratio of (A):(B) is within the above range, the viscosity will be low, and the adhesion to the substrate will be good.

That is, the adhesion to the substrate can be made good by introducing the bivalent group (A). Further, the viscosity of the curable composition can be made low by introducing the bivalent group (B). Further, by introducing the bivalent group (B), it is possible to obtain an adherence substance excellent in flexibility. Thus, it is considered that so-called zipping tends to hardly occur at the time of peeling the adherence substance from the adherend. Further, it is considered that by introducing the bivalent group (B), it is possible to lower the surface resistance of the adherence substance and to suppress the peel electrostatic charge.

### <PROCESS FOR PRODUCING POLYESTER ETHER TYPE SILYL GROUP-CONTAINING POLYMER (S1)>

The polyester ether type polymer (S1) can be produced by a process comprising a first step of reacting an initiator (z) made of a compound having from 1 to 8 hydroxy groups in its molecule with a cyclic ester compound (a) having from 3 to 9 carbon atoms and an alkylene oxide (b) having from 2 to 4 carbon atoms in the presence of a polymerization catalyst to obtain a polyester ether poly(mono)ol (p1), a second step of introducing an amino group, an isocyanate group, an allyl group, an acryloyl group or a methacryloyl group to the terminal of the polyester ether poly(mono)ol (p1) to obtain a substituted polyester ether compound (p11), and a third step of reacting the substituted polyester ether compound (p11) with a silyl compound (I) to obtain a polyester ether type silyl group-containing polymer (S1).

Further, the polyester ether type polymer (S1) of the formula (1) wherein Q is the group (Q8) or (Q10) can be produced by a method of reacting the polyester ether poly(mono)ol (p1) obtainable in the first step with the silyl compound (I).

The reaction of the substituted polyester ether compound (p11) or the polyester ether poly(mono)ol (p1) with the silyl compound (I) is carried out in the presence of a catalyst as the case requires.

### [FIRST STEP]

### <INITIATOR (z)>

The initiator (z) to be used in the first step is a compound having from 1 to 8 hydroxy groups in the molecule. The initiator (z) may be a first initiator (z1) which has from 1 to 8 hydroxy groups in the molecule and which has no oxyalkylene group in the molecule, or a second initiator (z2) made of a polyoxyalkylene poly(mono)ol obtainable by reacting the first initiator (z1) with an alkylene oxide.

In a case where the first initiator (z1) or a second initiator (z2) is used as the initiator (z), R¹ in the above formula (1) corresponds to the residue obtained by removing all hydroxy groups from the first initiator (z1).

In a case where the first initiator (z1) is used as the initiator (z), -(Y)ᵣ- in the formula (1) derives from the cyclic ester compound (a) and the alkylene oxide (b), polymerized with the first initiator (z1). In a case where the second initiator (z2) is used as the initiator (z), -(Y)ᵣ- in the formula (1) derives from the alkylene oxide polymerized with the first initiator (z1) at the time of producing the second initiator (z2), and the cyclic ester compound (a) and alkylene oxide (b) polymerized with the second initiator (z2).

The number (t) of hydroxy groups in the initiator (z) corresponds to t in the polyester ether type polymer (S1) of the above formula (1) obtained by using the initiator (z). The number (t) of hydroxy groups in the second initiator (z2) corresponds to the number (t) of hydroxy groups in the first initiator (z1) used for its production.

A specific example of the first initiator (z1) may, for example, be a monohydric alcohol such as methanol, ethanol, 2-propanol, n-butanol, iso-butanol, 2-ethylhexanol, decyl alcohol, lauryl alcohol, tridecanol, cetyl alcohol, stearyl alcohol or oleyl alcohol; water; a dihydric alcohol such as ethylene glycol, diethylene glycol, propylene glycol, dipropylene glycol, 1,3-propanediol, 1,3-butanediol, 1,4-butanediol, 1,6-hexanediol or 1,4-cyclohexanediol; a polyhydric alcohol such as glycerol, diglycerol, trimethylolpropane, pentaerythritol, dipentaerythritol or tripentaerythritol; a saccharide such as glucose, sorbitol, dextrose, fructose, sucrose or methyl glycoside, or a derivative thereof; or a phenol compound such as bisphenol A, bisphenol F, bisphenol S, novolac, resol or resorcin.

The second initiator (z2) preferably has an average hydroxy value of from 20 mgKOH/g to 280 mgKOH/g. Its number average molecular weight (Mn) is preferably from 400 to 5,000, more preferably from 700 to 2,000. When such Mn is at least the lower limit within the above range, good physical properties can be obtained, and when it is at most the upper limit, it is possible to maintain the viscosity to be low.

The second initiator (z2) preferably has a molecular weight distribution (Mw/Mn) of at most 3.0, more preferably at most 2.0. when the molecular weight distribution of the second initiator (z2) is within the above range, and the content of the portion derived from the second initiator (z2) is adjusted to be at least 50 mass% in the poly(mono)ol (p1), the molecular weight distribution (Mw/Mn) of the poly(mono)ol (p1) can be made to be at most 1.4. When the molecular weight distribution of the poly(mono)ol (p1) is made small, it is possible to lower the viscosity of the poly(mono)ol (p1). Accordingly, it is possible to lower the viscosity of the polyester ether type polymer (S1).

The second initiator (z2) is preferably a polyoxyalkylene poly(mono)ol (z21) represented by the following formula (4) from the viewpoint of easy production.

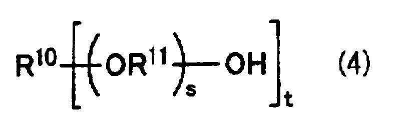

In the above formula (4), R¹⁰ represents a t-valent hydrocarbon group having from 1 to 20 carbon atoms, R¹¹ represents an alkylene group having from 2 to 4 carbon atoms, t represents an integer of from 1 to 8, and s represents an integer of from 1 to 250.

In a case where a plurality of R¹¹ are present in its molecule, such a plurality of R¹¹ may be the same or different from one another. That is, when s is an integer of from 2 to 250, and/or when t is an integer of from 2 to 8, each R¹¹ independently represents an alkylene group having from 2 to 4 carbon atoms.

When t is from 2 to 8, t pieces of the monovalent groups (-(OR¹¹)ₛ-(Y¹⁰)_{r'}-Q-SiXₐR³₍₃₋ₐ₎) bonded to R¹⁰ may be the same or different from one another. That is, when t is from 2 to 8, each s independently represents an integer of from 1 to 250.

When the number of carbon atoms in R¹⁰ is at most 20, the melting point will be low, and the production will be easy. Such R¹⁰ is preferably a t-valent hydrocarbon group having from 1 to 10 carbon atoms.

When s is an integer of at most 250, the viscosity is low, and the handling is easy. Such s is preferably an integer of from 5 to 100.

In the above formula (4), R¹⁰ is a residue derived from the first initiator (z1) used for the production of the polyoxyalkylene poly(mono)ol (z21). That is, it is a residue obtained by removing all hydroxy groups from the first initiator (z1). In the formula (4), t corresponds to the number (t) of hydroxy groups in the first initiator (z1) employed. The number (t) of hydroxy groups in the polyoxyalkylene poly(mono)ol (z21) corresponds to t in the polyester ether type polymer (S1) of the above formula (1) which is obtained by using the polyoxyalkylene poly(mono)ol (z21) as the initiator (z).

### <POLYESTER ETHER TYPE SILYL GROUP-CONTAINING POLYMER (S11)>

When a polyoxyalkylene poly(mono)ol (z21) represented by the above formula (4) is used as the initiator (z), it is possible to obtain a polyester ether type silyl group-containing polymer represented by the above formula (2) (hereinafter sometimes referred to as a polyester ether type polymer (S11)) via the second and third steps.

In the formula (2), Q, R³, X, a and t are the same as Q, R³, X, a and t in the above formula (1), including the preferred embodiments.

In the formula (2), R¹⁰, R¹¹ and s are the same as R¹⁰, R¹¹ and s in the above formula (4), including the preferred embodiments.

Y¹⁰ is a bivalent group (A) derived from the after-mentioned cyclic ester compound (a) or a bivalent group (B) derived from the after-mentioned alkylene oxide (b).

In the formula (2), r' is an integer of at least 1, and the sum of r' and s (r'+s) is an integer of from 2 to 1,000, preferably an integer of from 5 to 200, more preferably an integer of from 10 to 100.

Such a polyester ether type polymer (S11) has a merit that it is excellent in the handling efficiency, since it has a low viscosity.

With respect to the initiator (z), one type may be used alone, or two or more types may be used in combination. Further, initiators different in the number (t) of hydroxy groups may be used in combination.

### <CYCLIC ESTER COMPOUND (a)>

The cyclic ester compound (a) to be used in the first step is one having from 3 to 9 carbon atoms.

A preferred example may be β-propiolactone (3 carbon atoms), δ-valerolactone (5 carbon atoms) or ε-caprolactone (6 carbon atoms). Among them, ε-caprolactone is preferred. In a case where the cyclic ester compound (a) is ε-caprolactone, a bivalent group (A) wherein R⁴ is a pentamethylene group (n-pentylene group) will be formed when it undergoes ring opening during the polymerization.

The cyclic ester compound (a) may be a monomer, a dimer or a trimer. From the viewpoint of the reactivity, it is preferably a monomer. With respect to the cyclic ester compound (a), one type may be used alone, or two or more types may be used in combination.

### <ALKYLENE OXIDE (b)>

The alkylene oxide (b) to be used in the first step is one having from 2 to 4 carbon atoms.

Its specific example may, for example, be ethylene oxide, propylene oxide, 1,2-butylene oxide, 2,3-butylene oxide or oxetane.

With respect to the alkylene oxide (b), one type may be used alone, or two or more types may be used in combination.

Among the above examples, it is preferred to use at least one type selected from ethylene oxide and propylene oxide.

In a case where the alkylene oxide (b) is ethylene oxide, a bivalent group (B) wherein R⁵ is an ethylene group is formed by its ring opening during the polymerization. Further, in a case where the alkylene oxide (b) is propylene oxide, a bivalent group (B) wherein R⁵ is a propylene group, is formed by its ring opening during the polymerization.

### <POLYMERIZATION CATALYST>

In the first step, a polymerization catalyst is used at the time of copolymerizing the initiator (z) with the cyclic ester compound (a) and the alkylene oxide (b). Such a polymerization catalyst is not particularly limited. However, specifically, it may, for example, be (1) a composite metal cyanide complex catalyst, or (2) a compound catalyst having P=N bond represented by a hydroxide salt of a phosphazenium cation. It is more preferred to employ a composite metal cyanide complex catalyst.

By using a neutral composite metal cyanide complex catalyst in the first step, it is possible to control the hydrolysis of the cyclic ester compound (a), whereby a polyester ether poly(mono)ol (p1) can be obtained in good yield.

Further, the composite metal cyanide complex catalyst has a high activity, and when the composite metal cyanide complex catalyst is used in the first step, the polyester ether poly(mono)ol (p1) obtainable in such a first step tends to have a large molecular weight. A polyester ether type silyl group-containing polymer (S1) obtainable by using such a polyester ether poly(mono)ol (p1) having a large molecular weight has a merit such that it is excellent in the curability, and the cured product of the curable composition will be excellent in the mechanical property such as elongation.

Further, when the composite metal cyanide complex catalyst is used in the first step, the copolymerization reaction rate can be increased, and it is possible to obtain a polyester ether poly(mono)ol (p1) having a high molecular weight with a narrow molecular weight distribution. A polyester ether type silyl group-containing polymer (S1) obtainable by using the polyester ether poly(mono)ol (p1) having a high molecular weight with a narrow molecular weight distribution, has a low viscosity and thus has a merit such that it is excellent in the operation efficiency such as the handling efficiency.

### [(1) COMPOSITE METAL CYANIDE COMPLEX CATALYST]

The composite metal cyanide complex catalyst is preferably a complex having zinc hexacyanocobaltate as the main component, because of its high polymerization activity. The composite metal cyanide complex catalyst preferably has an organic ligand. It is more preferred that the organic ligand is, for example, an ether or an alcohol, since a high activity is thereby obtainable.

As the ether as the above organic ligand, it is preferred to employ at least one member selected from ethylene glycol dimethyl ether (glyme), diethylene glycol dimethyl ether (diglyme) and triethylene glycol dimethyl ether, whereby the complex will easily be handled at the time of the polymerization reaction. Among them, glyme is more preferred from the viewpoint of the handling efficiency of the complex during the polymerization reaction.

As the alcohol as the above organic ligand, it is preferred to use tert-butyl alcohol or a mixture of tert-butyl alcohol with at least one member selected from the group consisting of n-butyl alcohol, sec-butyl alcohol, iso-butyl alcohol, tert-pentyl alcohol, isopentyl alcohol, N,N-dimethylacetamide and ethylene glycol mono-tert-butyl ether, whereby the polymerization catalyst becomes more active, and the amount of the polymerization catalyst can be reduced, and consequently, the amount of the catalyst remaining in the polyester ether poly(mono)ol (p1) can be reduced.

Particularly by using tert-butyl alcohol, it is possible to increase the copolymer reaction rate with the cyclic ester compound (a) with the alkylene oxide (b), and it is possible to obtain a polyester ether poly(mono)ol (p1) having a narrow molecular weight distribution.

The amount of the composite metal cyanide complex catalyst is preferably from 1 to 500 ppm based on the total mass of the obtainable polyester ether poly(mono)ol (p1). It is more preferably from 1 to 100 ppm, whereby the storage stability of the product will be excellent, and it is economically advantageous.

Further, in a case where the amount of the composite metal cyanide complex catalyst remaining in the polyester ether poly(mono)ol (p1) is large, an operation to remove the composite metal cyanide complex catalyst from the obtained polyester ether poly(mono)ol (p1) may be carried out after completion of the first step. Otherwise, without removing the composite metal cyanide complex catalyst, the second step may be carried out as it is.

On the other hand, in a case where the amount of the composite metal cyanide complex catalyst remaining in the polyester ether poly(mono)ol (p1) is small and will not adversely affect the subsequent step, it is possible to proceed to the next step without carrying out a step of removing the composite metal cyanide complex catalyst. In such a case, the number of steps can be reduced by reducing the composite metal cyanide complex catalyst, whereby it is possible to increase the production efficiency of the polyester ether poly(mono)ol (p1).

Such a composite metal cyanide complex catalyst can be produced by a known production method.

### [(2) COMPOUND CATALYST HAVING P=N BOND]

The compound catalyst having P=N bond may, for example, be (2-1) a phosphazenium compound , (2-2) a phosphazene compound or (2-3) a phosphine oxide compound.
(2-1) The phosphazenium compound may, for example, be a compound disclosed in JP-A-11-106500. Specifically, it may, for example, be tetrakis[tris(dimethylamino)phosphoranylideneamino]phosphonium hydroxide, tetrakis[tris(dimethylamino)phosphoranylideneamino]phosphonium methoxide, tetrakis[tris(dimethylamino)phosphoranylideneamino]phosphonium ethoxide or tetrakis[tri(pyrrolidin-1-yl)phosphoranylideneamino]phosphonium-tert-butoxide.
(2-2) The phosphazene compound may, for example, be a compound disclosed in JP-A-10-36499. Specifically, it may, for example, be 1-tert-butyl-2,2,2-tris(dimethylamino)phosphazene, 1-(1,1,3,3-tetramethylbutyl)-2,2,2-tris(dimethylamino)phosphazene, 1-ethyl-2,2,4,4,4-pentakis(dimethylamino)-2λ⁵,4λ⁵-catenadi (phosphazene), 1-tert-butyl-4,4,4-tris(dimethylamino)-2,2-bis[tris(dimethylamino)phosphoranylideneamino]-2λ⁵,4λ⁵-catenadi (phosphazene), 1-(1,1,3,3-tetramethylbutyl)-4,4,4-tris(dimethylamino)-2,2-bis[tris(dimethylamino)phosphoranylideneamino]-2λ⁵,4λ⁵-catenadi (phosphazene), 1-tert-butyl-2,2,2-tri(1-pyrrolidinyl)phosphazene or 7-ethyl-5,11-dimethyl-1,5,7,11-tetraaza-6λ⁵-phosphaspiro[5,5]undeca-1(6)-ene.
(2-3) The phosphine oxide compound may, for example, be a compound disclosed in JP-A-11-302371. Specifically, it may, for example, be tris([tris(dimethylamino)phosphoranylideneamino]phosphine oxide or tris[tris(diethylamino)phosphoranylideneamino]phosphine oxide.

Among them, it is preferred to employ (2-1) a phosphazenium compound or (2-3) a phosphine oxide compound from the viewpoint of availability.

In a case where the above compound catalyst having P=N bond is used as a polymerization catalyst, its amount is such that the compound catalyst having P=N bond is preferably from 1×10⁻⁴ to 5×10⁻¹ mol equivalent, more preferably from 1×10⁻⁴ to 2×10⁻¹ mol equivalent, per mol equivalent of active hydrogen atoms i.e. mol equivalent of hydroxy groups, in the initiator (z).

When the amount of the compound catalyst having P=N bond is at least 1×10⁻⁴ mol equivalent, per mol equivalent of active hydrogen atoms in the initiator (z), the copolymerization reaction rate of the cyclic ester compound (a) with the alkylene oxide (b) can be well accelerated, and when it is at most 5×10⁻¹ mol equivalent, such is preferred to suppress the production cost.

Further, in a case where (2) the compound catalyst having P=N bond is used as the polymerization catalyst in the first step, if the catalyst remains in the polyester ether poly(mono)ol (p1), such a polyester ether poly(mono)ol (p1) tends to be colored, and therefore, it is preferred to remove the catalyst component after the production of the polyester ether poly(mono)ol (p1).

### <PRODUCTION OF POLYESTER ETHER POLY(MONO)OL (p1)>

In the first step, the initiator (z) is reacted with the cyclic ester compound (a) and the alkylene oxide (b) in the presence of the polymerization catalyst to obtain a polyester ether poly(mono)ol (p1).

The types and amounts of the cyclic ester compound (a) and the alkylene oxide (b) used in the first step are suitably set depending upon the adhesive properties of the adherence substance obtainable by curing the curable composition. When the ester chain derived from the bivalent group (A) is increased, the adhesion to the substrate will be improved. When the ether chain derived from the bivalent group (B) is increased, an adherence substance rich in flexibility can be obtained.

In a case where two or more initiators (z) different in the number (t) of hydroxy groups are to be used, such two or more imitators (z) may be mixed and then reacted with the cyclic ester compound (a) and the alkylene oxide (b). Otherwise, the respective initiators (z) may be reacted with the cyclic ester compound (a) and the alkylene oxide (b) to obtain poly(mono)ols (p1), which may then be mixed.

It is preferred to mix a monool obtained by using an initiator (z) having one hydroxy group, with a polyol obtained by using an initiator (z) having two or more hydroxy groups, from the viewpoint of the adjustment of the physical properties and the viscosity.

In a case where a first initiator (z1) is used as the initiator (z), the copolymer chains of the bivalent group (A) and the bivalent group (B) in the polyester ether type polymer (S1) derive from the copolymer chains of the cyclic ester compound (a) and the alkylene oxide (b) in the polyester ether poly(mono)ol (p1).

Further, in a case where the second initiator (z2) is used as the initiator, the block chains made of -(OR¹¹⁻)ₛ in the above formula (2), and the copolymer chains of the cyclic ester compound (a) and the alkylene oxide (b), bonded to the block chains, will be the copolymer chains of the bivalent group (A) and the bivalent group (B) in the polyester ether type polymer (S1).

A random copolymer of the polyester ether poly(mono)ol (p1) can be obtained by carrying out polymerization by simultaneously adding at least one type of the alkylene oxide (b) and at least one type of the cyclic ester compound (a) into the reactor in the presence of the initiator (z) and the polymerization catalyst.

Otherwise, a block copolymer of the polyester ether poly(mono)ol (p1) can be obtained by sequentially adding at least one type of the alkylene oxide (b) and at least one type of the cyclic ester compound (a).

Further, it is possible to obtain a polyester ether poly(mono)ol wherein random copolymer moieties and block copolymer moieties are present in the same molecule by adjusting the addition order and amounts of the cyclic ester compound (a) and the alkylene oxide (b) to introduce the polyester chain moiety derived from the cyclic ester compound (a) and/or the polyoxyalkylene chain moiety to parts in the molecule.

For example, by simultaneously adding a cyclic ester polymer having at least one cyclic ester compound (a) preliminarily polymerized in a predetermined amount, and an alkylene oxide polymer having at least one alkylene oxide preliminarily polymerized in a predetermined amount, it is possible to introduce block copolymer chains in the molecule of a polyester ether poly(mono)ol (p1).

In a case where the polyester ether poly(mono)ol (p1) has random copolymer chains, the content of the random copolymer chains of the cyclic ester compound (a) and the alkylene oxide (b) in the polyester ether poly(mono)ol (p1), is preferably from 10 to 95 mass%, more preferably from 20 to 90 mass%.

The content of random copolymer chains is the proportion of random copolymer chains obtained by simultaneously adding the cyclic ester compound (a) and the alkylene oxide (b), in the polyester ether poly(mono)ol (p1). It is calculated from the total amount of the cyclic ester compound (a) and the alkylene oxide (b) simultaneously added, based on the total mass of the produced polyester ether poly(mono)ol (p1).

When the content of random copolymer chains is at least 10 mass%, sufficient curability of the polyester ether type silyl group-containing polymer (S1) can easily be obtained, and when it is at most 95 mass%, the viscosity of the polyester ether poly(mono)ol (p1) can be suppressed at a low level, whereby the handling efficiency will be good.

The content of the bivalent group (A) represented by the above formula (A) derived from the cyclic ester compound (a) is preferably from 5 to 50 mass%, more preferably from 5 to 40 mass%, in the polyester ether poly(mono)ol (p1) obtained in the first step. When the content of such a bivalent group (A) is at least 5 mass%, sufficient curability of the polyester ether type silyl group-containing polymer (S1) can easily be obtained, and the wettability of the cured product tends to be good. When it is at most 50 mass%, the viscosity of the polyester ether poly(mono)ol (p1) is likely to be low.

In order to bring the content of the bivalent group(A) to be from 5 to 50 mass%, it is preferred to adjust the proportion of the cyclic ester compound (a) occupying in the total mass of the initiator (z), the cyclic ester compound (a) and the alkylene oxide (b) used in the polymerization reaction, to be from 5 to 50 mass%.

The content of the bivalent group (B) represented by the above formula (B) is preferably from 50 to 95 mass%, more preferably from 60 to 95 mass%, in the polyester ether poly(mono)ol (p1) obtained in the first step.

In a case where the first initiator (z1) is used as the initiator (z), in order to bring the content of the bivalent group (B) to be from 50 to 95 mass%, it is preferred to adjust the proportion of the alkylene oxide (b) occupying in the total mass of the cyclic ester compound (a) and the alkylene oxide (b) used for the polymerization reaction, to be from 50 to 95 mass%. When such a content is at least 50 mass%, the viscosity of the polyester ether poly(mono)ol (p1) can easily be made low, and when it is at most 95 mass%, sufficient curability of the polyester ether type silyl group-containing polymer (S1) can easily be obtained.

Further, in a case where the second initiator (z2) is used as the initiator (z), in order to bring the content of the bivalent group (B) to be from 50 to 95 mass%, it is preferred to bring the proportion of the total mass of the oxyalkylene group contained in the second initiator (z2) and the alkylene oxide (b), occupying in the total mass of the initiator (z), the cyclic ester compound (a) and the alkylene oxide (b) used for the polymerization reaction, to be from 50 to 95 mass%.

Further, it is preferred to adjust the mass ratio of the bivalent group (B) derived from the alkylene oxide (b) to the bivalent group (A) derived from the cyclic ester compound (a), present in the polyester ether poly(mono)ol (p1) obtained in the first step, to be within a range of the molar ratio (A):(B) in the above polyester ether type polymer (S1).

There is no particularly restriction with respect to the production conditions for the polyester ether poly(mono)ol (p1), i.e. the stirring efficiency, the supply rates of the cyclic ester compound (a) and the alkylene oxide (b), the reaction temperature, and the presence or absence of the solvent, and the production conditions may be suitably set depending upon the production efficiency or the physical properties of the desired polyester ether poly(mono)ol (p1).

In the first step, addition of the cyclic ester compound (a) and the alkylene oxide (b) into the reactor may be an addition from a liquid phase or addition from a gas phase.

The polyester ether poly(mono)ol (p1) obtained in the first step has an average hydroxy value (OHV) of preferably from 10 to 230 mgKOH/g, more preferably from 20 to 120 mgKOH/g, further preferably from 30 to 60 mgKOH/g.

When the average hydroxy value is at least 10 mgKOH/g, the viscosity will be low, and the handling will be easy, and when it is at most 230 mgKOH/g, flexibility and strength can be provided.

The polyester ether poly(mono)ol (p1) obtained in the first step has a number average molecular weight of preferably from 500 to 10,000, more preferably from 1,000 to 5,000, further preferably from 1,000 to 3,000.

When the number average molecular weight of the polyester ether poly(mono)ol (p1) is at least 500, the number of cyclic ester units can be sufficiently existed, whereby sufficient curability of the polyester ether type silyl group-containing polymer (S1) can easily be obtained, and sufficient stickiness can be obtained on the surface of the cured product. When the number average molecular weight of the polyester ether poly(mono)ol (p1) is at most 10,000, the viscosity of the polyester ether poly(mono)ol (p1) can be made sufficiently low.

The molecular weight distribution (Mw/Mn) of the polyester ether poly(mono)ol (p1) is preferably at most 2.0, more preferably from 1.02 to 1.4, further preferably from 1.02 to 1.35. When the molecular weight distribution is at most 2.0, the viscosity of the polyester ether poly(mono)ol (p1) can easily be made low. When the molecular weight distribution of the polyester ether poly(mono)ol (p1) is at least 1.02, the time required for the polymerization reaction tends to be short, such being preferred from the viewpoint of the improvement of the production efficiency.

### [SECOND STEP]

In the second step, to the terminal of the polyester ether poly(mono)ol (p1) obtained in the first step, an amino group, an isocyanate group, an allyl group, an acryloyl group or a methacryloyl group is introduced to obtain a substituted polyester ether compound (p11).

### <TERMINAL AMINO GROUP POLYESTER ETHER COMPOUND (p11a)>

(1) The polyester ether poly(mono)ol (p1) can be subjected to catalytic reductive amination by a known means to introduce an amino group to the terminal thereby to obtain a terminal amino group polyester ether compound (p11a). For example, the polyester ether poly(mono)ol (p1) is neutralized by an appropriate acid or chemical absorber such as oxalic acid or magnesium silicate and subjected to filtration so as to remove insoluble substances, and then charged in a reductive amination zone and brought into contact with a reductive amination catalyst under reductive amination conditions in the presence of ammonia and hydrogen. This catalyst is sometimes called a hydrogenation-dehydrogenation catalyst. The reductive amination conditions are such that for example, the temperature is from 150 to 275°C and the pressure is from 3.5 to 34.6 MPa (500 to 5,000 psig) (gauge pressure), preferably the temperature is from 180 to 240°C and the pressure is from 10.4 to 20.8 MPa (1,500 to 3,000 psig). Further, the amount of ammonia to be used is preferably from 4 to 150 mol, more preferably from 4 to 100 mol per mol of hydroxy groups in the polyester ether poly(mono)ol (p1). The amount of hydrogen to be used is preferably from 0.5 to 10 mol, more preferably from 0.5 to 5 mol per mol of hydroxy groups in the polyester ether poly(mono)ol (p1).
(2) Otherwise, the terminal amino group polyester ether compound (p11a) can be produced also by introducing an isocyanate group to the terminal of the polyester ether poly(mono)ol (p1) by a known means and then reacting a diamine compound.

As the polyisocyanate to introduce an isocyanate group, known one may be used. Specifically, diphenylmethane diisocyanate, tolylene diisocyanate, xylylene diisocyanate, methylene-bis(cyclohexyl isocyanate), isophorone diisocyanate or hexamethylene diisocyanate may, for example, be mentioned.

As the diamine compound to be reacted with the isocyanate group, known one may be used. Specifically, an aliphatic diamine such as ethylenediamine, propylenediamine, trimethylenediamine, tetramethylenediamine, pentamethylenediamine, hexamethylenediamine, 2,2,4-trimethylhexamethylenediamine, tolylenediamine, hydrazine or piperazine; an alicyclic diamine such as isophoronediamine or dicyclohexylmethane-4,4'-diamine; or an aromatic diamine such as phenylenediamine or xylylenediamine may be mentioned.

In the terminal amino group polyester ether compound (p11a), one hydrogen atom bonded to the nitrogen atom of the terminal amino group may be substituted by a monovalent organic group having from 1 to 8 carbon atoms.

### <TERMINAL ISOCYANATE GROUP POLYESTER ETHER COMPOUND (p11b)>

By charging the polyester ether poly(mono)ol (p1) in an excess polyisocyanate compound for reaction, it is possible to obtain a terminal isocyanate group polyester ether compound (p11 b) having an isocyanate group introduced to its terminal. The amount charged is preferably such that the amount of isocyanate group is 2 mols per mol of hydroxy groups in the polyester ether poly(mono)ol (p1). The polyisocyanate compound may be used alone or in combination as a mixture of two or more of them. The polyisocyanate compound may, for example, be diphenylmethane diisocyanate, tolylene diisocyanate, xylylene diisocyanate, methylene-bis(cyclohexyl isocyanate), isophorone diisocyanate or hexamethylene diisocyanate.

### <TERMINAL ALLYL GROUP POLYESTER ETHER COMPOUND (p11c)>

(1) The polyester ether poly(mono)ol (p1) is reacted with an alkali metal, an alkali metal hydride, a metal alkoxide or an alkali metal hydroxide to convert OH to OM (wherein M is an alkali metal), and then reacted with an unsaturated group-containing halogenated hydrocarbon to obtain a terminal allyl group polyester ether compound (p 11 c) having an allyl group introduced to its terminal.
(2) Otherwise, the terminal allyl group polyester ether compound (p11c) can be produced also by introducing an isocyanate group to the terminal of the polyester ether poly(mono)ol (p1) by a known means and then reacting an allyl alcohol.

### <TERMINAL ACRYLOYL GROUP( OR METHACRYLOYL GROUP)POLYESTER ETHER POLYOL (p11d)>

The polyester ether poly(mono)ol (p1) is subjected to esterification by means of acrylic acid and/or methacrylic acid or ester exchange by means of an acrylate and/or a methacrylate in the presence of a catalyst to obtain a terminal acryloyl group (or methacryloyl group) polyester ether polyol (p11d) having an acryloyl group or a methacryloyl group introduced to its terminal.

### [THIRD STEP]

In the third step, a polyester ether type polymer (S1) is synthesized from the substituted polyester ether compound (p11) obtained in the second step. Such a polyester ether type polymer (S1) is obtained by reacting the substituted polyester ether compound (p11) with a silyl compound in the presence of a catalyst as the case requires. The polyester ether type polymer (S1) has a group (Q1) to (Q10) formed by reacting the substituted polyester ether compound (p11) with a specific silyl compound.

### <POLYESTER ETHER TYPE POLYMER (S1) HAVING GROUP (Q1)>

Method (S1-I): the group (Q1) can be synthesized by reacting the terminal amino group polyester ether compound (p11 a) with a silyl isocyanate compound (i). Otherwise, method (S1-II): the group (Q1) can be synthesized by reacting the terminal isocyanate group polyester ether compound (p11b) with a silylamino compound (ii).

First, the method (S1-I) will be described below.

### [SILYL ISOCYANATE COMPOUND (i)]

The silyl isocyanate compound (i) is represented by the following formula (5).

OCN-R²¹⁴-SiXₐR³₍₃₋ₐ₎ (5)

R²¹⁴, R³ and a in this formula have the same meanings as R²¹⁴, R³ and a in the above formula (1) including the preferred embodiments. Further, X represents a hydrolyzable group in the definition of X in the above formula (1). -R²-SiXₐR³₍₃₋ₐ₎ in the above formula (1) derives from -SiXₐR³₍₃₋ₐ₎ in the silyl isocyanate compound (i) represented by the above formula (5).

The silyl isocyanate compound (i) may, for example, be an isocyanate silane compound such as isocyanate methyl trimethoxysilane, 2-isocyanate ethyl trimethoxysilane, 3-isocyanate propyl trimethoxysilane, 3-isocyanate butyl trimethoxysilane, 3-isocyanate pentyl trimethoxysilane, isocyanate methyl triethoxysilane, 2-isocyanate ethyl triethoxysilane, 3-isocyanate propyl triethoxysilane, 3-isocyanate butyl triethoxysilane, 3-isocyanate pentyl triethoxysilane, isocyanate methyl methyl dimethoxysilane, isocyanate ethyl ethyl dimethoxysilane, isocyanate propyl trimethoxysilane or isocyanate propyl triethoxysilane.

Among them, 3-isocyanate propyl trimethoxysilane or 3-isocyanate propyl triethoxysilane is preferred.

### (CATALYST)

A catalyst may be used at the time of reacting the terminal amino group polyester ether compound (p11a) with the silyl isocyanate compound (i). As the catalyst, a known reaction catalyst may be employed. Specifically, a tin catalyst such as dibutyltin dilaurate (DBTDL), or a bismuth catalyst may be mentioned. Further, a composite metal cyanide complex catalyst or the like may be used. Such a composite metal cyanide complex catalyst is the same as the composite metal cyanide complex catalyst as described in the first step.

The amount of the catalyst to be used in the third step is not particularly limited, so long as it is an amount required for the reaction of the terminal amino group polyester ether compound (p11a) with the silyl isocyanate compound (i). It is preferably at most 100 ppm, more preferably at most 50 ppm, based on the total mass (finish mass) of the polyester ether type polymer (S1) obtained by this reaction. When the amount of the catalyst is at most 100 ppm, the residual amount of the catalyst in the polyester ether type polymer (S1) is little, whereby good storage stability can easily be obtained.

In the reaction of the terminal amino group polyester ether compound (p11a) with the silyl isocyanate compound (i), the reaction temperature and the time required until the completion of the reaction, vary depending upon the amount of the catalyst. It is usually preferred to carry out the reaction at a temperature of from 20 to 200°C, preferably from 50 to 150°C, for a few hours. Further, this reaction is preferably carried out in an inert gas such as nitrogen gas or argon gas. In such a case, it is possible to suppress a side reaction, whereby it is possible to improve the yield of the obtainable silyl group-containing polymer.

With respect to the blend ratio of the terminal amino group polyester ether compound (p 11 a) to the silyl isocyanate compound (i) in the third step, the molar ratio represented by NCO/NHR i.e. the ratio of the number of isocyanate groups (NCO) of the silyl isocyanate compound (i) to the number of amino groups (-NHR, wherein R is hydrogen or a monovalent organic group having from 1 to 8 carbon atoms) of the terminal amino group polyester ether compound (p11 a), is preferably at most 1.1, more preferably at most 1.0, further preferably at most 0.97.

When the NCO/NHR (molar ratio) is within the above range, amino groups of the terminal amino group polyester ether compound (p11a) tend to easily remain after the reaction.

The lower limit of the NCO/NHR (molar ratio) is preferably 0.3, more preferably 0.5, further preferably 0.8, from the viewpoint of the storage stability.

The reaction product obtained by carrying out the reaction as described above mainly contains the polyester ether type silyl group-containing polymer (S1) and further contains an amino group-remaining polymer (S1-NHR) wherein amino groups of the terminal amino group polyester ether compound (p11a) substantially remain as unreacted.

The curable composition containing such a polyester ether type silyl group-containing polymer (S1) has a low viscosity and good coatability. Accordingly, good coatability can be obtained even without using a solvent, whereby the curable composition can be made solvent-free at the time of forming an adherence substance. Further, such a composition is excellent in curability, and when contacted with moisture, it undergoes curing (moisture curing) quickly and firmly to present a cured product. For such moisture curing, the reactive silicon group (-SiXₐR³₍₃₋ₐ₎) will contribute. Further, when it is applied on a substrate and cured, good adhesion to a substrate can be obtained. The cured product after the curing has good flexibility, good surface wettability and a low adherence property. Thus, it is suitable as an adherence substance layer, which has good wettability and adhesion to the adherend and at the same time has good removability.

Now, method (S1-II) will be described.

In the method (S1-II), the terminal isocyanate group polyester ether compound (p11b) is reacted with a silylamino compound (ii) to obtain a polyester ether type polymer (S1) having a group (Q1).

### [SILYLAMINO COMPOUND (ii)]

The silylamino compound (ii) is represented by the following formula (6):

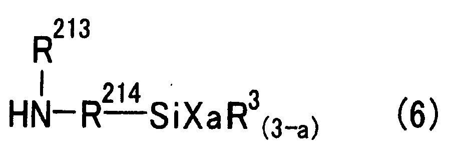

In the formula, R²¹³, R²¹⁴, R³ and a have the same meanings as R²¹³, R²¹⁴, R³ and a in the above formula (1) including the preferred embodiments. Further, X represents a hydrolysable group in the definition of X in the above formula (1).

The silylamino compound (ii) is preferably an aminosilane compound such as 3-aminopropyltrimethoxysilane, 3-aminopropyltriethoxysilane, 3-aminopropyltriisopropoxysilane, 3-aminopropylmethyldimethoxysilane, 3-aminopropylmethyldiethoxysilane, 3-(2-aminoethyl)aminopropyltrimethoxysilane, 3-(2-aminoethyl)aminopropylmethyldimethoxysilane, 3-(2-aminoethyl)aminopropyltriethoxysilane, 3-(2-aminoethyl)aminopropylmethyldiethoxysilane, 3-(2-aminoethyl)aminopropyltriisopropoxysilane, 3-(2-(2-aminoethyl)aminoethyl)aminopropyltrimethoxysilane, 3-(6-aminohexyl)aminopropyltrimethoxysilane, 3-(N-ethylamino)-2-methylpropyltrimethoxysilane, 2-aminoethylaminomethyltrimethoxysilane, N-cyclohexylaminomethyltriethoxysilane, N-cyclohexylaminomethyldiethoxymethylsilane, 3-ureidopropyltrimethoxysilane, 3-ureidopropyltriethoxysilane, N-phenyl-3-aminopropyltrimethoxysilane, N-phenylaminomethyltrimethoxysilane, N-benzyl-3-aminopropyltrimethoxysilane, N-vinylbenzyl-3-aminopropyltriethoxysilane, N-(3-triethoxysilylpropyl)-4,5-dihydroimidazole, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane or N,N'-bis[3-(trimethoxysilyl)propyl]ethylenediamine.

The reaction of the isocyanate group in the terminal isocyanate group polyester ether compound (p11b) with the amino group in the silylamino compound (ii) can be carried out in the same manner as in the above method (S1-I).

### <POLYESTER ETHER TYPE POLYMER (S1) HAVING GROUP (Q2)>

The group (Q2) can be synthesized by a method of reacting the terminal isocyanate group polyester ether compound (p11b) with a silylmercapto compound (iii). The reaction method, the reaction conditions, etc. are in accordance with the reaction of the terminal amino group polyester ether compound (p11a) with the silyl isocyanate compound (i) (the reaction method, the reaction conditions, etc. are the same also in formation of the following polyester ether type polymers (S1) having groups (Q3) to (Q10)).

### [SILYLMERCAPTO COMPOUND(iii)]

The silylmercapto compound (iii) is represented by the following formula (7):

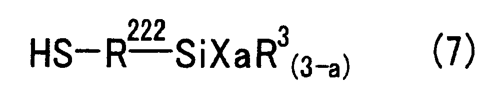

In the formula, R²²², R³ and a have the same meanings as R²²², R³ and a in the above formula (1) including the preferred embodiments. Further, X represents a hydrolysable group in the definition of X in the above formula (1).

The silylmercapto compound (iii) may, for example, be 3-mercaptopropyltrimethoxysilane, 3-mercaptopropylmethyldimethoxysilane, 3-mercaptopropyltriethoxysilane, 3-mercaptopropylmethyldiethoxysilane, mercaptomethyltrimethoxysilane or mercaptomethyltriethoxysilane.

### <POLYESTER ETHER TYPE POLYMER (S1) HAVING GROUP (Q3)>

The group (Q3) can be synthesized by a method of reacting the terminal allyl group polyester ether compound (p11c) with the silylmercapto compound (iii).

### <POLYESTER ETHER TYPE POLYMER (S1) HAVING GROUP (Q4)>

The group (Q4) can be synthesized by a method of reacting the terminal acryloyl group (or methacryloyl group) polyester ether polyol (p11d) with a silylhydro compound (iv).

### [SILYLHYDRO COMPOUND (iv)]

The silylhydro compound (iv) is represented by the following formula (8):

H-SiXaR³₍₃₋ₐ₎ (8)

In the formula, R³ and a have the same meanings as R³ and a in the above formula (1) including the preferred embodiments. Further, X represents a hydrolysable group in the definition of X in the above formula (1).

The silylhydro compound (iv) may, for example, be trimethoxysilane, triethoxysilane, methyldiethoxysilane, methyldimethoxysilane, phenyldimethoxysilane or 1-[2-(trimethoxysilyl)ethyl]-1,1,3,3-tetramethyldisiloxane.

### <POLYESTER ETHER TYPE POLYMER (S1) HAVING GROUP (Q5)>

The group (Q5) can be synthesized by a method of reacting the terminal acryloyl group (or methacryloyl group) polyester ether polyol (p11d) with the silylmercapto compound (iii).

### <POLYESTER ETHER TYPE POLYMER (S1) HAVING GROUP (Q6)>

The group (Q6) can be synthesized by a method of reacting the terminal acryloyl group (or methacryloyl group) polyester ether polyol (p11d) with the silylamino compound (ii).

### <POLYESTER ETHER TYPE POLYMER (S1) HAVING GROUP (Q7) OR GROUP (Q9)>

The group (Q7) can be synthesized by a method of reacting the terminal amino group polyester ether compound (p11a) with a silylepoxy compound (v).

The group (Q9) can be synthesized by a method of reacting the terminal amino group polyester ether compound (p11a) with a silylepoxy compound (v').

### [SILYLEPOXY COMPOUNDS (v) AND (v')]

The silylepoxy compound (v) is represented by the following formula (9). The silylepoxy compound (v') is represented by the following formula (10).

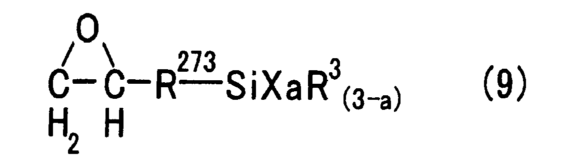

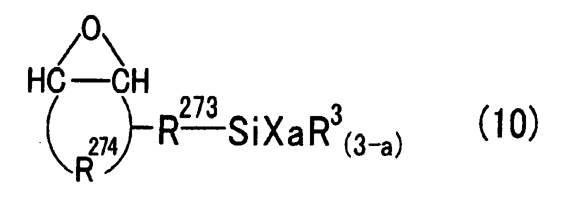

In the formulae (9) and (10), R²⁷³, R²⁷⁴, R³ and a have the same meanings as R²⁷³, R²⁷⁴, R³ and a in the above formula (1) including the preferred embodiments. Further, X represents a hydrolysable group in the definition of X in the above formula (1).

As the silylepoxy compound (v), an epoxysilane compound such as 3-glycidoxypropyltrimethoxysilane, 3-glycidoxypropyltriethoxysilane or 3-glycidoxypropylmethyldimethoxysilane may suitably be used.

As the silylepoxy compound (v'), an epoxysilane compound such as 2-(3,4-epoxycyclohexyl)ethyltrimethoxysilane or 2-(3,4-epoxycyclohexyl)ethyltriethoxysilane may suitably be used.

### <POLYESTER ETHER TYPE POLYMER (S1) HAVING GROUP (Q8) OR (Q10)>

The group (Q8) can be synthesized by a method of reacting the polyester ether poly(mono)ol (p1) obtained in the first step with the silylepoxy compound (v).

The group (Q10) can be synthesized by a method of reacting the polyester ether poly(mono)ol (p1) obtained in the first step with the silylepoxy compound (v').

That is, they can be synthesized without the second step.

### <POLYETHER TYPE SILYL GROUP-CONTAINING POLYMER (S2)>

The polyether type polymer (S2) is the same as the polyester ether type polymer (S1) except that Y in the above formula (1) consists only of bivalent groups (B).

### <PROCESS FOR PRODUCING POLYETHER TYPE SILYL GROUP-CONTAINING POLYMER (S2)>

The polyether type silyl group-containing polymer (S2) can be produced by producing a polyether poly(mono)ol (p2) (hereinafter sometimes referred to as poly(mono)ol (p2)) represented by R¹-[-(Y)ᵣ-OH]ₜ (wherein Y is a bivalent group represented by the above formula (B)), followed by a second step of introducing an amino group, an isocyanate group, an allyl group, an acryloyl group or a methacryloyl group to the terminal of the polyether poly(mono)ol (p2) to obtain a substituted polyether compound (p21) and a third step of reacting the substituted polyether compound (p21) with a silyl compound (I) in the case of a catalyst as the case requires.

Further, the polyether type polymer (S2) of the above formula (1) wherein Q is the group (Q8) or (Q10) can be produced by a method of reacting the polyether poly(mono)ol (p2) obtained in the first step with the silyl compound (I).

### [FIRST STEP]

The polyether poly(mono)ol (p2) can be produced by a known method. For example, it can be produced by [1]: a method of reacting an initiator (z) made of a compound having from 1 to 8 hydroxy groups in its molecule with an alkylene oxide (b) having from 2 to 4 carbon atoms in the presence of a polymerization catalyst.

The initiator (z) and the alkylene oxide (b) are the same as the initiator (z) and the alkylene oxide (b) in the process for producing the above-mentioned polyester ether type polymer (S1), respectively. The first initiator (z1) may be used, or the second initiator (z2) may be used.

As the method of reacting the initiator (z) with the alkylene oxide (b) to obtain the polyether poly(mono)ol (p2), a known method may be employed. As the polymerization catalyst, a known catalyst may suitably be employed. The polymerization catalyst may be an alkali catalyst such as an alkali metal hydroxide, or may be the above-mentioned composite metal cyanide complex catalyst. The composite metal cyanide complex catalyst is more preferred.

Or, [2]: the poly(mono)ol (p2) may, for example, be a polyoxytetramethylene glycol. The polyoxytetramethylene glycol can be produced by ring-opening polymerization of THF. The poly(mono)ol (p2) is also available from commercial products.

The polyether poly(mono)ol (p2) has a number average molecular weight of preferably from 500 to 15,000, more preferably from 700 to 5,000. When the number average molecular weight is at least the lower limit within the above range, good physical properties can be obtained, and when it is at most the upper limit, the viscosity can be maintained to be low.

The molecular weight distribution (Mw/Mn) of the polyether poly(mono)ol (p2) is preferably at most 3, more preferably from 2.8 to 1.5, further preferably from 2.5 to 1.8. When the molecular weight distribution is at most 3, the viscosity of the poly(mono)ol (p2) can easily be made sufficiently low. When the molecular weight distribution of the poly(mono)ol (p2) is at least 1.5, the time required for the polymerization reaction can be made short, such being preferred from the viewpoint of improvement of the production efficiency.

The average hydroxy value of the polyether poly(mono)ol (p2) is preferably from 15 to 230 mgKOH/g, more preferably from 20 to 170 mgKOH/g. When the average hydroxy value is at least 15 mgKOH/g, good physical properties can be obtained, and when it is at most 230 mgKOH/g, the viscosity can be maintained to be low.

### [SECOND STEP]

The second step is carried out in the same manner as in the second step in the-above process for producing the polyester ether type polymer (S1).

### [THIRD STEP]

The third step is the same as the third step in the above-mentioned process for producing the polyester ether type polymer (S1).

Like the case of the above polyester ether type polymer (S1), the reaction product obtained in the third step mainly contains the polyether type silyl group-containing polymer (S2) and further contains a substantially unreacted substituted polyether compound (p21).

Also a curable composition containing such a polyether type silyl group-containing polymer (S2) has a low viscosity, undergoes moisture curing at room temperature quickly and firmly and presents good adhesion to a substrate. Thus, it is suitable as a curable composition to obtain an adherence substance. Further, a cured product after the curing has good flexibility and has good surface wettability and a low adherence property. Therefore, it is suitable as an adherence substance layer, which has good wettability and adhesion to an adherend and has good removability.

### <POLYESTER TYPE SILYL GROUP-CONTAINING POLYMER (S3)>

The polyester type silyl group-containing polymer (S3) is the same as the polyester ether type polymer (S1) except that Y in the above formula (1) consists only of the bivalent group (A).

### <PROCESS FOR PRODUCING POLYESTER TYPE SILYL GROUP-CONTAINING POLYMER (S3)>

The polyester type silyl group-containing polymer (S3) can be produced via a first step of producing a polyester poly(mono)ol (p3) (hereinafter sometimes referred to as a poly(mono)ol (p3)) represented by R¹-[-(Y)ᵣ-OH]ₜ (wherein Y is a bivalent group represented by the above formula (A)), a second step of introducing an amino group, an isocyanate group, an allyl group, an acryloyl group or a methacryloyl group to the terminal of the polyester poly(mono)ol (p3) to obtain a substituted polyester compound (p31), and a third step of reacting the substituted polyester compound (p31) with the silyl group (I), in the presence of a catalyst as the case requires.

### [FIRST STEP]

The polyester poly(mono)ol (p3) can be produced by a known method. It is also available from commercial products.

The polyester poly(mono)ol (p3) has a number average molecular weight of preferably from 500 to 15,000, more preferably from 700 to 5,000. When the number average molecular weight is at least 500, good physical properties can be obtained, and when it is at most 15,000, the viscosity can be maintained to be low.

The molecular weight distribution (Mw/Mn) of the poly(mono)ol (p3) is preferably at most 3, more preferably from 2.8 to 1.5, further preferably from 2.5 to 1.8. When the molecular weight distribution is at most 2, the viscosity of the poly(mono)ol (p3) can be easily made to be sufficiently low. When the molecular weight distribution of the poly(mono)ol (p3) is at least 1.5, the time required for the polymerization reaction tends to be short, such being preferred from the viewpoint of improvement of the production efficiency.

The average hydroxy value of the polyester poly(mono)ol (p3) is preferably from 15 to 230 mgKOH/g, more preferably from 20 to 170 mgKOH/g. When the average hydroxy value is at least 15 mgKOH/g, good physical properties can be obtained, and when it is at most 230 mgKOH/g, no solvent is required for dilution, or a solvent can be used in a small amount.

### [SECOND STEP]

The second step can be carried out in the same manner as in the second step in the above-mentioned process for producing the polyester ether type polymer (S1).

### [THIRD STEP]

The third step is the same as the third step in the above-mentioned process for producing the polyester ether type polymer (S1).

Like the case of the above polyester ether type polymer (S1), the reaction product obtained in the third step mainly contains the polyester type silyl group-containing polymer (S3) and further contains a substantially unreacted substituted polyester compound (p31).

Also a curable composition containing such a polyester type silyl group-containing polymer (S3) has a low viscosity, undergoes moisture curing at room temperature quickly and firmly and presents good adhesion to a substrate. Thus, it is suitable as a curable composition to obtain an adherence substance. Further, a cured product after the curing has good flexibility and has good surface wettability and a low adherence property. Therefore, it is suitable as an adherence substance layer, which has good wettability and adhesion to an adherend and provides good removability.

The silyl group-containing polymer (S) contained in the curable composition of the present invention may be any one of the polyester ether type polymer (S1), the polyether type polymer (S2) and the polyester type polymer (S3), or a combination of two of them, or may contain three of them. In a case where two or more of them are used in combination, they may be mixed after producing the polyester ether type polymer (S1), the polyether type polymer (S2) and the polyester type polymer (S3) respectively. Otherwise, the substituted poly(mono)ol compounds (p11), (p21) and/or (p31) obtained in the second step may be mixed and then such a mixture may be reacted with the silyl compound (I).

Further, in each of the polyester ether type polymer (S1), the polyether type polymer (S2) and the polyester type polymer (S3), one type of each polymer may be used alone or two or more types may be used in combination.

In a case where two members selected from the polyester ether type polymer (S1), the polyether type polymer (S2) and the polyester type polymer (S3) are used as mixed, the mixing ratio is preferably within a range of from 95:5 to 5:95 by mass ratio.

### <ANOTHER SILYL GROUP-CONTAINING POLYMER (S4)>

The curable composition of the present invention may contain a silyl group-containing polymer (S4) represented by the following formula (3) as an optional component (hereinafter sometimes referred to as another polymer (S4)).

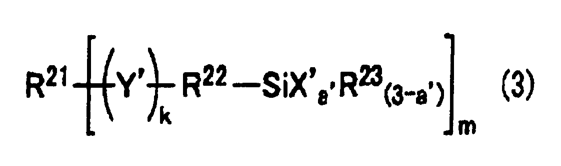

In the formula (3), R²¹ represents a m-valent residue obtained by removing all hydroxy groups from a compound having m pieces of hydroxy groups in the molecule; R²² represents a bivalent organic group; R²³ represents a monovalent organic group having from 1 to 20 carbon atoms; X' is a hydroxy group or a hydrolyzable group; Y' represents an oxyalkylene group having from 2 to 4 carbon atoms; a' represents an integer of from 1 to 3; k represents an integer of from 1 to 10,000; m represents an integer of from 1 to 8; when m is from 2 to 8, m pieces of monovalent groups bonded to R²¹ may be the same or different from one another; when a' is 2 or 3, 2 or 3 pieces of X' bonded to one silicon atom may be the same or different from one another; when a' is 1, 2 pieces of R²³ bonded to one silicon atom may be the same or different from each other; and when k is 2 or more, the plurality of Y' bonded to one another, may be the same or different from one another.

In the above formula (3), R²¹ is the same as R¹ in the above formula (1), R²² as R²³¹, R²³ as R³, X' as X, Y' as Y, a' as a and m as t, respectively, including the preferred embodiments.

In the formula (3), k represents an integer of from 1 to 10,000. Such k is preferably an integer of from 1 to 1,000, more preferably an integer of from 10 to 1,000. Further, when m is from 2 to 8, each k independently represents an integer of form 1 to 10,000.

Such another polymer (S4) can be produced by a known production method. It is also available from commercial products.

In the curable composition of the present invention, by incorporating another polymer (S4) in addition to the silyl group-containing polymer (S), the wettability of the curable composition may be improved.

The blend amount of another polymer (S4) is preferably at least 5 parts by mass per 100 parts by mass of the silyl group-containing polymer (S) (including the hydroxy group-remaining polymer) in order to obtain a sufficient effect of its addition. The upper limit is preferably 70 parts by mass from the viewpoint of the viscosity for coating. A more preferred range of the blend amount of such another polymer (S4) is from 10 to 70 parts by mass.

In the curable composition of the present invention, bonding groups Q and silyl groups are present substantially in equal amounts, or silyl groups are contained in a larger amount than bonding groups Q, because bonding groups Q derive from the silyl compound (I), and silyl groups derive from the silyl compound (I) and another polymer (S4). Here, "substantially in equal amounts" means containing the premise that the silyl compound (I) used for the preparation of the curable composition is a high purity product. An industrially available silyl compound (I) has more or less undergone a condensation of silyl groups with one another by an influence of e.g. moisture or a modification of functional groups (modification such as hydrolytic modification). In the present invention, the ratio of bonding groups Q to silyl groups is preferably from 1/1 to 1/2, more preferably from 1/1 to 2/3, by molar ratio of bonding groups/silyl groups. Within such a ratio, the adherence substance obtainable by curing the curable composition will have a low adhesive strength and will be excellent in the stability of the adhesive strength.

### <ADDITIVES>

The curable composition of the present invention may contain additives. In the curable composition, it is preferred not to use a plasticizer. Particularly, it is preferred not to use an ester type plasticizer such a dioctyl phthalate. The reason is that if an ester type plasticizer is employed, the adhesive strength between the cured product and the substrate tends to be low, and an adhesive deposit is likely to result.

### [CURING AGENT]

The curable composition of the present invention is cured by contact with water. Accordingly, it reacts with water in the atmosphere to undergo moisture curing. Otherwise, immediately before the curing, water (H₂O) may be added as a curing agent. In such a case, the amount of water is preferably from 0.01 to 5 parts by mass, more preferably from 0.01 to 1 part by mass, particularly preferably from 0.05 to 0.5 part by mass, per 100 parts by mass of the total amount of the silyl group-containing polymer (S) and another polymer (S4) (including the hydroxy group-remaining polymer). By adjusting the amount of the curing agent to be at least 0.01 part by mass, the curing can effectively be promoted, and by adjusting the amount of the curing agent to be at most 5 parts by mass, the working time in use can be secured.

### [CURING CATALYST]

It is preferred to incorporate a curing catalyst (a curing accelerator) to accelerate the hydrolysis and/or crosslinking reaction of the reactive silicon groups in the silyl group-containing polymer (S) and another polymer (S4).

As such a curing catalyst, a known catalyst may suitably be used as a component to accelerate the reaction of reactive silicon groups. Specifically, it may, for example, be a tin compound such as an organic tin carboxylate such as dibutyltin diacetate, dibutyltin dilaurate, dioctyltin dilaurate, (n-C₄H₉)₂Sn(OCOCH=CHCOOCH₃)₂, (n-C₄H₉)₂Sn(OCOCH=CHCOO(n-C₄H₉))₂, (n-C₈H₁₇)₂Sn(OCOCH=CHCOOCH₃)₂, (n-C₈H₁₇)₂Sn(OCOCH=CHCOO(n-C₄H₉))₂ or (n-C₈H₁₇)₂Sn(OCOCH=CHCOO(iso-C₈H₁₇))₂; a sulfur-containing organic tin compound such as (n-C₄H₉)₂Sn(SCH₂COO), (n-C₈H₁₇)₂Sn(SCH₂COO), (n-C₈H₁₇)₂Sn(SCH₂CH₂COO), (n-C₈H₁₇)₂Sn(SCH₂COOCH₂CH₂OCOCH₂S), (n-C₄H₉)₂Sn(SCH₂COO(iso-C₈H₁₇))₂, (n-C₈H₁₇)₂Sn(SCH₂COO(iso-C₈H₁₇))₂, (n-C₈H₁₇)₂Sn(SCH₂COO(n-C₈H₁₇))₂ or (n-C₄H₉)₂SnS; an organic tin oxide such as (n-C₄H₉)₂SnO or (n-C₈H₁₇)₂SnO; a reaction product of at least one ester compound selected from the group consisting of ethyl silicate, dimethyl maleate, diethyl maleate, dioctyl maleate, dimethyl phthalate, diethyl phthalate and dioctyl phthalate, with the above-mentioned organic tin oxide; a chelate tin compound such as (n-C₄H₉)₂Sn(acac)₂, (n-C₈H₁₇)₂Sn(acac)₂, (n-C₄H₉)₂Sn(OC₈H₁₇)(acac), (n-C₄H₉)₂Sn(OC(CH₃)CHCO₂C₂H₅)₂, (n-C₈H₁₇)₂Sn(OC(CH₃)CHCO₂C₂H₅)₂, (n-C₄H₉)₂Sn(OC₈H₁₇)(OC(CH₃)CHCO₂C₂H₅) or bisacetyl acetonate tin (where the above acac means an acetylacetonate ligand, and OC(CH₃)CHCO₂C₂H₅ means an ethyl acetoacetate ligand); a reaction product of at least one alkoxysilane selected from the group consisting of tetramethoxysilane, tetraethoxysilane and tetrapropoxysilane, with the above chelate tin compound; or an organic tin compound containing a -SnOSn- bond, such as (n-C₄H₉)₂(CH₃COO)SnOSn(OCOCH₃)(n-C₄H₉)₂ or (n-C₄H₉)₂(CH₃O)SnOSn(OCH₃)(n-C₄H₉)₂.

Further, specific examples of the curing catalyst include a bivalent tin carboxylate such as tin 2-ethyl hexanoate, tin n-octylate, tin naphthenate or tin stearate; a metal salt other than a tin salt of an organic carboxylic acid such as octylic acid, oleic acid, naphthenic acid or stearic acid; a calcium carboxylate, a zirconium carboxylate, an iron carboxylate, a vanadium carboxylate, a bismuth carboxylate such as bismuthtris-2-ethyl hexanoate, a lead carboxylate, a titanium carboxylate or a nickel carboxylate; a titanium alkoxide such as tetraisopropyl titanate, tetrabutyl titanate, tetramethyl titanate or tetra(2-ethylhexyl titanate); an aluminum alkoxide such as aluminum isopropylate or mono-sec-butoxyaluminum diisopropylate; a zirconium alkoxide such as zirconium n-propylate or zirconium n-butyrate; a titanium chelate such as titanium tetraacetylacetonate, titanium ethylacetoacetate, titanium octylene glycolate or titanium lactate; an aluminum chelate such as aluminum trisacetylacetonate, aluminum trisethylacetoacetate, or diisopropoxy aluminum ethylacetoacetate; a zirconium compound such as zirconium tetraacetylacetonate, zirconium bisacetylacetonate, zirconium acetylacetonate bisethyl actoacetate or zirconium acetate; an acidic compound such as phosphoric acid, p-toluenesulfonic acid or phthalic acid; an aliphatic monoamine such as butylamine, hexylamine, octylamine, decylamine or laurylamine; an aliphatic diamine such as ethylenediamine or hexanediamine; an aliphatic polyamine such as diethylenetriamine, triethylenetetramine or tetraethylenepentamine; a heterocyclic amine such as piperidine, piperazine or 1,8-diazabicyclo(5.4.0)udecene-7; an aromatic amine such as metaphenylenediamine, an alkanolamine such as monoethanolamine, diethanolamine or triethanolamine; a trialkylamine such as triethylamine; a primary to tertiary ammonium acid salt made of the above amine and an organic acid such as an aliphatic monocarboxylic acid (such as formic acid, acetic acid, octylic acid or 2-ethylhexanoic acid), an aliphatic polycarboxylic acid (such as oxalic acid, malonic acid, succinic acid, glutaric acid or adipic acid), an aromatic monocarboxylic acid (such as benzoic acid, toluic acid or ethylbenzoic acid), an aromatic polycarboxylic acid (such as phthalic acid, isophthalic acid, terephthalic acid, nitrophthalic acid or trimellitic acid), a phenol compound (such as phenol or resorcinol), a sulfonic acid compound (such as an alkyl benzenesulfonic acid, toluenesulfonic acid or benzenesulfonic acid) or a phosphoric acid compound, or an inorganic acid such as hydrochloric acid, hydrobromic acid or sulfuric acid; an ammonium hydroxide such as triethylmethylammonium hydroxide, trimethylbenzylammonium hydroxide, hexyltrimethylammonium hydroxide, octyltrimethylammonium hydroxide, decyltrimethylammonium hydroxide, dodecyltrimethylammonium hydroxide, octyldimethylethylammonium hydroxide, decyldimethylethylammonium hydroxide, dodecyldimethylethylammonium hydroxide, dihexyldimethylammonium hydroxide, dioctyldimethylammonium hydroxide, didecyldimethylammonium hydroxide or didodecyldimethylammonium hydroxide; and an amine compound such as various modified amine to be used as a curing agent for an epoxy resin.

These curing catalysts may be used alone or in combination as a mixture of two or more of them. In a case where two or more of them are combined, it is, for example, preferred to combine an aliphatic monoamine or another above-mentioned amine compound to the above-mentioned metal-containing compound such as a reaction product of the above-mentioned bivalent tin carboxylate, organic tin carboxylate or organic tin oxide with an ester compound, since it is thereby possible to obtain an excellent curability.

In a case where a curing catalyst is to be added, its amount is preferably from 0.001 to 10 parts by mass, more preferably from 0.01 to 5 parts by mass, per 100 parts by mass of the total amount of the silyl group-containing polymer (S) and another polymer (S4) (including a hydroxy group-remaining polymer). When the amount of the curing catalyst is adjusted to be at least 0.001 part by mass, the curing speed can effectively be accelerated, and when the amount of the curing catalyst is adjusted to be at most 10 parts by mass, it is possible to secure a working time at the time of its use.

### [SOLVENT]

The curable composition of the present invention has a low viscosity and can be applied without using any solvent, but it may contain a solvent.

Such a solvent is not particularly limited, and it may, for example, be an aliphatic hydrocarbon, an aromatic hydrocarbon, a halogenated hydrocarbon, an alcohol, a ketone, an ester, an ether, an ester alcohol, a ketone alcohol, an ether alcohol, a ketone ether, a ketone ester or an ester ether.

Among them, it is preferred to employ an alcohol as the solvent, since the storage stability of the curable composition can thereby be improved. Such an alcohol is preferably an alkyl alcohol having from 1 to 10 carbon atoms, more preferably methanol, ethanol, isopropanol, isopentyl alcohol or hexyl alcohol, further preferably methanol or ethanol. Particularly when methanol is employed, if its amount is increased, the curing time of the curable composition can be prolonged. This is an effective technique to prolong a so-called pot life i.e. the time until the curable composition reaches the predetermined viscosity after its preparation.

In a case where a solvent is added to the curable composition, its amount is preferably at most 500 parts by mass, more preferably from 1 to 100 parts by mass, per 100 parts by mass of the total amount of the silyl group-containing polymer (S) and another polymer (S4) (including a hydroxy group-remaining polymer). If the amount exceeds 500 parts by mass, shrinkage of the cured product may occur along with evaporation of the solvent.

### [DEHYDRATING AGENT]

In order to improve the storage stability, the curable composition of the present invention may contain a small amount of a dehydrating agent within a range not to impair the effects of the present invention.

A specific example of such a dehydrating agent may, for example, be an alkyl orthoformate such as methyl orthoformate or ethyl orthoformate; an alkyl orthoacetate such as methyl orthoacetate or ethyl orthoacetate; a hydrolyzable organic silicone compound such as methyl trimethoxysilane, vinyl trimethoxysilane, tetramethoxysilane or tetraethoxysilane; or a hydrolyzable organic titanium compound. Among them, vinyl trimethoxysilane or tetraethoxysilane is preferred from the viewpoint of the cost and dehydrating ability.

In a case where a dehydrating agent is incorporated to the curable composition, its amount is preferably from 0.001 to 30 parts by mass, more preferably from 0.01 to 10 parts by mass, per 100 parts by mass of the total amount of the silyl group-containing polymer (S) and another polymer (S4) (including a hydroxy group-remaining polymer).

### [OTHER ADDITIVES]

The following filler, reinforcing agent, stabilizer, flame retardant, antistatic agent, release agent or antifungal agent may be incorporated to the curable composition.

The filler or reinforcing agent may, for example, be carbon black, aluminum hydroxide, calcium carbonate, titanium oxide, silica, glass, bone meal, wood meal or fiber flakes.

The stabilizer may, for example, be an antioxidant, an ultraviolet absorber or a light-stabilizer.

The flame retardant may, for example, be a chloroalkyl phosphate, dimethylmethyl phosphonate, ammonium polyphosphate or an organic bromine compound.

The release agent may, for example, be wax, soap or silicone oil.

The antifungal agent may, for example, be pentachlorophenol, pentachlorophenol laurate or bis(tri-n-butyltin) oxide.

Further, to the curable composition, tackifiers may be added for the purpose of improving the adhesion to the substrate.

### <ADHERENCE SUBSTANCE>

The curable composition of the present invention is obtained by mixing the silyl group-containing polymer (S), an optionally incorporated another polymer (S4) and additives which may be incorporated as the case requires.

The adherence substance of the present invention is obtained by curing the above curable composition. By curing the above curable composition, a weekly adhesive or low adhesive adherence substance having a peel adhesive strength of at most 8 N/25 mm can be obtained. That is, the adherence substance of the present invention is an adherence substance obtainable by curing the curable composition comprising the silyl group-containing polymer (S), and has a peel adhesive strength of preferably at most 8 N/25 mm, more preferably higher than 0 N/25 mm and at most 8 N/25 mm, further preferably higher than 0 N/25 mm and at most 1 N/25 mm, particularly preferably from 0.005 to 0.8 N/25 mm. The curable composition of the present invention preferably contains no additives which increase the adherence property.

The reason why the cured product obtained by curing the curable composition comprising the silyl group-containing polymer (S) is weakly adhesive or low adhesive is not clearly understood, but it is considered that the hydrolysable silyl group (-SiXₐR³₍₃₋ₐ₎) and the specific bonding group Q contribute. That is, it is considered that the bonding group Q has high polarity and functions to increase the adhesive strength, and the hydrolysable silyl group functions to lower the adhesive strength, and by such groups disposed close to each other, a weak adherence property or a low adherence property is exhibited.

An adherence substance comprising a substrate and an adherence substance layer, the adherence substance layer adhering to an adherend to be removable, is preferably such that the adhesion between the adherence substance layer and the substrate is high and they are hardly separated, and the adherence substance layer and the adherend are separated without an adhesive deposit. When the curable composition of the present invention is applied on a substrate and cured, the cured product (adherence substance layer) will favorably adhere to the substrate. Such favorable adhesion to a substrate is considered to be attributable to a high polarity of the specific bonding group (Q).

The cured product (adherence substance) obtainable by cuing the curable composition of the present invention has good wettability to an adherend. Such good wettability is considered to be attributable to the flexibility of the structure represented by -Y- in the formula (1). That is, -Y- has a linear structure without branched structure and has no aromatic ring, and thereby has a freely movable molecular structure and functions to increase the flexibility.

Further, the polarity of -Y- is relatively low. It is considered that good wettability to an adherent can be obtained by having such a -Y- structure. Particularly, it is considered that the longer the chain length of -Y-, the higher the flexibility and the wettability.

### <CURING OF CURABLE COMPOSITION>

The adherence substance of the present invention is obtainable by curing the above curable composition. The curable composition may be shaped after the curing. For example, the curable composition may be cured in a suitable form such as a sheet form and then shaped in a predetermined shape by e.g. die cutting, whereupon it can be used alone as an adherence substance. However, it is preferred that the curable composition is coated to a substrate, followed by curing to obtain a laminate.

The conditions for curing the curable composition may be set as the case requires. For example, one having a curable catalyst added, is prepared as the curable composition. A predetermined amount of water is added as a curing agent thereto, followed by mixing thoroughly. The mixture is applied on a substrate. The applied thickness is suitably set. Thereafter, the coated substrate is heated in an oven and aged at room temperature, whereby the curable composition can be cured. It is also effective to leave it in a humidified environment at the time of aging at room temperature or after such aging. Heating by e.g. an oven is suitably set depending upon e.g. the heat resistance temperature of the substrate. For example, it is preferred to leave it in an environment of from 60 to 120°C for from about 1 to 30 minutes. Particularly in a case where a solvent is used, it is preferred to set a constant drying time. However, rapid drying is not desirable, since it causes foaming. Further, in the oven, or after taking it out from the oven, steam may be applied.

Application of the curable composition can be carried out continuously. That is, on a substrate taken out from a roll, the curable composition having a predetermined amount of water mixed, is applied and then heated and dried in an in-line oven. The obtained shaped product (laminate) is wound up if necessary, together with a separator. Such an wound up laminate is stored and aged in a humidified room temperature environment as the case requires to obtain a shaped adherence substance. In another application method, the substrate and the separator in the above method may be reversed. That is, application is initially made on the separator, and later, the substrate may be bonded.

### <LAMINATE>

The present invention provides a laminate comprising at least one substrate layer and an adherence substance layer made of the adherence substance of the present invention. In a case where the laminate is in a sheet form, this laminate will be a pressure sensitive adhesive sheet. Otherwise, when the laminate is formed into a tape form, it will be a pressure sensitive adhesive tape.

Further, without using a substrate, on a separator which will be described later, the curable composition is applied and cured to form a cured product, whereupon the separator is peeled off, so that the adherence substance may be used alone. In such a case, a double coated pressure sensitive adhesive tape may, for example, be obtained. The curable composition of the present invention has a low viscosity and is excellent in coating properties even in a case where no solvent is employed Accordingly, good application is possible to the separator. Specifically, the curable composition is applied to the separator and heated and dried, and further, another separator is laminated thereon, followed by aging, to obtain a pressure sensitive adhesive sheet made of the adherence substance having no substrate. At that time, without using the another separator, winding is carried out by using the back side of the separator initially applied, whereby a roll of the adherence substance may be produced.

The laminate may have another layer, as the case requires. For example, an adhesive layer may be provided between the substrate layer and the adherence substance layer to prevent separating between the substrate and the adherence substance. Further, a buffer layer made of e.g. a foam may be provided between the substrate layer and the adherence substance layer. Otherwise, an electrically conductive material layer may be provided between the substrate layer and the adherence substance layer. Such an electrically conductive layer may be obtained by applying an electrically conductive material such as a metal type eclectically conductive material, an ionic electrically conductive material or a carbon type electrically conductive material on the substrate layer. The electrically conductive material may be applied alone or in combination with a binder such as various resins. Further, on the side of the adherence substance layer opposite to the substrate layer, a separator (release liner) layer may be provided. Further, on the side of the substrate layer opposite to the adherence substance layer, a print layer may be provided. When a print layer is provided, printing may be carried out, and the appearance may be improved. Further, an adherence substance layer may be formed on each side of the substrate layer. In this case, a double coated pressure sensitive adhesive sheet may, for example, be obtained.

### <SUBSTRATE>

The material for the substrate is not particularly limited. A preferred example may be a polyester such as polyethylene terephthalate (PET); a polyolefin such as polyethylene, polypropylene or a polyethylene/polypropylene copolymer (block copolymer or random copolymer); a halogenated polyolefin such as polyvinyl chloride; paper such as hard board; a cloth such as woven fabric or nonwoven fabric; or a metal foil such as an aluminum foil. These substrates may be used in combination. For example, a laminate having a PET layer, a metal foil layer and a polyethylene layer laminated may be employed.

The surface of the substrate may not be processed beforehand. Even without carrying out preliminary processing, the surface of a polyester or paper bonded to the adherence substance layer becomes hardly separated by the adhesive effect along with the curing of the curable composition. A primer or the like may be applied, as the case requires.

On the other hand, in a case where a polyolefin is used as the substrate, it is preferred to preliminarily treat the surface to be coated with the curable composition, because the peel adhesive strength may sometimes become low with a non-treated surface. The preliminary treatment of the surface of the substrate made of a polyolefin to be coated with the curable composition, may, for example, be corona treatment (corona discharge treatment) or primer treatment. It is particularly preferred to carry out corona treatment, since the treatment is simple, and the process can be simplified.

For example, corona treatment may be carried out on one side of a polypropylene film having a thickness of 100 µm, and a curable composition is applied on this treated surface. After the application, heating and drying are carried out. With the film thus obtained, the side (the back side) having no adherence substance provided may be utilized as a separator, as it is. That is, this film may be wound up as it is to obtain a pressure sensitive adhesive film. That is, it can be wound up in a roll shape without interposing a separator.

### <ADHERENCE SUBSTANCE LAYER>

In the pressure sensitive adhesive sheet or the like of the present invention, the thickness of the adherence substance layer is not particularly limited. For example, it is preferably at least 5 µm, more preferably at least 20 µm, further preferably at least 30 µm, from the viewpoint of the coating precision. From the viewpoint of the stability of the adhesive strength and economical efficiency, it is preferably at most 200 µm, more preferably at most 100 µm, further preferably at most 80 µm.

### <SEPARATOR>

A separator may be laminated to an adhesive surface (the surface on which an adherend is bonded) of the above adherence substance layer. As such a separator, in addition to paper having the surface treated with a usual release agent, the above-mentioned non-treated polyolefin may be used. Otherwise, one having a polyolefin laminated on a substrate of paper or the like may also be used. Silicone oil contained in a conventional separator may cause contamination of electronic devices, however, by using a polyolefin as a separator, it is possible to prevent contamination by e.g. silicone oil. This is advantageous when the above pressure sensitive adhesive tape is used as a protective sheet for e.g. an electronic device. Further, when a polyolefin is used alone as a separator, recycling of the waste will be easy.

### <APPLICATION OF PRESSURE SENSITIVE ADHESIVE SHEET>

By using the adherence substance of the present invention, it is possible to obtain a pressure sensitive adhesive sheet which provides particularly good wettability and adhesion to an adherend and which at the same time has a low adhesive strength and is excellent in removability. Further, it is possible to obtain a pressure sensitive adhesive sheet having a peel electrostatic charge suppressed and being excellent also in a high speed peeling property. Accordingly, the application of the pressure sensitive adhesive sheet may, for example, be specifically for a protective sheet for electronic material such as electronic substrates, IC chips, etc.; a protective sheet for optical components such as polarizing plates, light diffusing plates, prism sheets, etc.; a protective sheet for various displays; a protective sheet for automobiles; a surface protective film for building boards; a decorative sheet for wall covering; or surface protection of products such as metal plates, coated steel plates, synthetic resin plates, coated plywood boards and heat reflecting glass. In the case of the application to a relatively large-sized protective sheet such as a protective sheet for automobiles, or to temporary bonding, a certain adhesive strength at a level of low adhesive region is sometimes required so that the sheet or the like will not be peeled by e.g. the wind. A surface protective film for building boards is used to protect floor covering materials and is removed after interior decoration. For surface protection of products such as metal plates, coated steel plates, synthetic resin plates, coated plywood boards and heat reflecting glass, it is required that the products are free from deposition of dusts and scars, and the pressure sensitive adhesive sheet can easily be peeled after its use without contamination of the surface of various adherends by the pressure sensitive adhesive.

A protective sheet or a protective tape is peeled and removed upon completion of its role to temporarily fix or protect a component. However, at the time of peeling the protective sheet from the component to which it was bonded, static electricity (so-called peel electrostatic charge) will be caused between the protective sheet and the component. There is a problem that such static electricity generates an adverse effect to a circuit of an electronic component, or dust or foreign particles are likely to deposit on the surface of the component due to such static electricity. Further, a surface protective film of a liquid crystal display (LCD) is also peeled and removed at the time of using the display. When such a protective film is peeled from the liquid crystal display, a peel electrostatic charge may sometimes be generated.

There may be a case of a trouble such that by the peel electrostatic charge, the liquid crystal alignment is disordered, and the image is disturbed. Accordingly, for the pressure sensitive adhesive sheet to be peeled after being bonded, it is required to suppress the generation of static electricity caused by the peel electrostatic charge or to quickly remove the generated static electricity. Because, the surface electrification of the adherend will cause deposition of dust or foreign particles on the adherend, or will cause deterioration of the function of the adherend.

Further, the tensile strength (peel strength) required to peel a pressure sensitive adhesive sheet usually tends to be large as the tension rate (the peeling speed) becomes high. For example, a surface protective sheet for e.g. an electronic device such as a display, a polarizing plate, an electronic substrate or an IC chip is preferably peeled smoothly at a high speed. It is required that the peel strength in the case of peeling at a high speed will not be large as compared with the peel strength in the case of peeling at a low speed. That is, a protective sheet is required to have a low speed dependence of the peel strength and to be excellent in the high speed peeling property.

The pressure sensitive adhesive sheet of the present invention can meet such requirements, and the pressure sensitive adhesive sheet of the present invention is particularly useful as a protective sheet to be peeled during the production process, such as a protective sheet for electronic materials or a protective sheet for optical components. That is, the adhesive strength is low and the removability is good, and at the same time the peel electrostatic charge is low, and the high speed peeling property is excellent.

Further, the adherence substance of the present invention is excellent not only in flexibility but also in wettability. Therefore, even when unevenness is present on the surface of the adherend, good adhesion can be secured. Thus, the pressure sensitive adhesive sheet of the present invention is suitable as a protective pressure sensitive adhesive sheet for optical components. Further, the pressure sensitive adhesive sheet of the present invention is excellent in adhesion so that no substantial displacement occurs in the adhesion area of the bonded adherend, and in addition, it has a low peel adhesive strength and can easily be peeled, such being useful for the improvement of the productivity in the process for producing liquid crystal panels, etc.

Thus, the pressure sensitive adhesive sheet of the present invention is useful as a protective film for light diffusing plates or prism sheets, particularly as a protective film for their uneven surfaces. Further, an optical component having the pressure sensitive adhesive sheet of the present invention bonded, can be peeled with a low peel adhesive strength, since the change with time of the adhesive strength of the adherence substance is small, and such a peel adhesive strength will not substantially change. Therefore, storage of an optical component for a long period of time will be possible.

Further, the pressure sensitive adhesive sheet of the present invention is useful also as a backgrind tape. The backgrind tape is a tape to protect the surface of a wafer during back grinding (grinding of the rear surface of a wafer) after forming an electronic circuit on a semiconductor wafer. The backgrind tape is bonded on the circuit surface to prevent a damage to the circuit surface or to prevent contamination of the wafer surface by penetration of grinding water or grinding dust. The pressure sensitive adhesive sheet of the present invention is excellent in adhesion so that displacement will not substantially occur in the adhesion area of the bonded adherend, but it has a low peel adhesive strength and can easily be peeled. Further, in a case where a polyolefin is used as the substrate, a separator is not required, and no contamination with e.g. silicone occur. Further, the peel electrostatic charge is suppressed, and a danger of damaging the circuit is little.

### EXAMPLES

Now, the present invention will be described in further detail with reference to Examples. However, it should be understood that the present invention is by no means restricted to such Examples.

In the following, propylene oxide will be abbreviated as PO, and dibutyltin dilaurate as DBTDL. Further, as water, pure water was used. Further, as a stainless steel plate, a SUS-304 alloy plate defined in JIS was used. The surface of this stainless steel plate treated by bright annealing was substantially flat and glossy. REFERENCE PREPARATION EXAMPLE 1: Preparation of composite metal cyanide complex catalyst

By the following method, a zinc hexacyanocobaltate having tert-butyl alcohol as an organic ligand (hereinafter referred to as TBA-DMC catalyst) was prepared. In this Example, polyol X is a polyol having number average molecular weight (Mn₁) of 1,000, obtained by addition-polymerizing PO to dipropylene glycol.

Firstly, in a 500 ml flask, an aqueous solution comprising 10.2 g of zinc chloride and 10 g of water, was put, and while stirring this aqueous solution at 300 rpm (300 round per minute) and maintaining it at 40°C, an aqueous solution comprising 4.2 g of potassium hexacyanocobaltate (K₃[Co(CN)]₆) and 75 g of water, was dropwise added over a period of 30 minutes. After completion of the dropwise addition, the mixture was further stirred for 30 minutes. Thereafter, a mixture comprising 40 g of ethylene glycol mono-tert-butyl ether (hereinafter abbreviated as EGMTBE), 40 g of tert-butyl alcohol (hereinafter abbreviated as TBA), 80 g of water and 0.6 of polyol X, was added to the above mixture, followed by stirring at 40°C for 30 minutes and then at 60°C for 60 minutes. The obtained reaction mixture was subjected to filtration over a period of 50 minutes by means of a circular filtration plate with a diameter of 125 mm and a quantitative filter paper for fine particles (No. 5C manufactured by ADVANTEC) under pressure (0.25 MPa) to separate solid.

Then, to this cake containing the composite metal cyanide complex, a mixture comprising 18 g of EGMTBE, 18 g of TBA and 84 g of water, was added, followed by stirring for 30 minutes, whereupon pressure filtration (filtration time: 15 minutes) was carried out. To the cake containing the composite metal cyanide complex obtained by the filtration, a mixture comprising 54 g of EGMTBE, 54 g of TBA and 12 g of water, was further added, followed by stirring for 30 minutes, to obtain an EGMTBE/TBA slurry containing the composite metal cyanide complex having an organic ligand. This slurry was used as TBA-DMC catalyst.

5 g of this slurry was taken into a flask, preliminarily dried in a nitrogen stream and then dried under reduced pressure at 80°C for 4 hours. The obtained solid was weighed, whereby the concentration of the composite metal cyanide complex contained in this slurry was found to be 4.70 mass%.

Here, a zinc hexacyanocobaltate-glyme complex catalyst is obtained in Preparation Example 1 for the TBA-DMC catalyst by using glyme instead of EGMTBE and TBA.

### PREPARATION EXAMPLE 1: PREPARATION OF POLYETHER TYPE SILYL GROUP-CONTAINING POLYMER NP-2 (S2-1)

### [FIRST STEP: PREPARATION OF POLYETHER POLYOL]

4,720 g of PO was polymerized in the presence of 0.059 g of a zinc hexacyanocobaltate-glyme complex catalyst by using, as an initiator, 295 g of a triol having Mn=1000 obtained by ring-opening polymerization of glycerol with PO to obtain a polyoxypropylene polyol (G-17000-0; polyol c) having an average hydroxy value of 9.9 mgKOH/g.

### [SECOND STEP: PREPARATION OF TERMINAL ALLYL GROUP POLYETHER COMPOUND]

A methanol solution of sodium methoxide corresponding to 1.05 equivalent to hydroxy groups of polyol c was added, and methanol was distilled off under reduced pressure under heating to convert terminal hydroxy groups of the polyoxypropylene triol to sodium alkoxide. Then, 1.5 equivalent of allyl chloride was added and reacted.

After the reaction, unreacted allyl chloride was removed under reduced pressure, and further, a by-product salt was removed by purification to obtain a terminal allyl group oxypropylene polymer. Hydroxy groups remaining in the polymer were analyzed by a method of measuring the hydroxy value in accordance with JIS K1557, whereupon the amount of hydroxy groups was 0.01 mmol/g, and it was confirmed that the terminal was substituted by an allyl group.

### [THIRD STEP: INTRODUCTION OF SILYL GROUP]

To 1,000 g of the obtained terminal allyl group oxypropylene polymer, 42g of 3-mercaptopropyltrimethoxysilane (SILA-ACE S-810, manufactured by CHISSO CORPORATION) and a solution having 5 g of 2,2'-azobis(2-methylbutyronitrile) (hereinafter referred to as AMBN) dissolved in 15 g of methanol were added all at once and heated at 70°C for 12 hours for reaction, followed by deaeration under reduced pressure to obtain an oxyalkylene polymer (NP-2) having trimethoxysilyl groups. Of NP-2, the number average molecular weight (Mn) was 17000, the molecular weight distribution (Mw/Mn) was 1.29, and the viscosity was 20,000 mPa·s/25°C.

### PREPARATION EXAMPLE 2: PREPARATION OF POLYETHER TYPE SILYL GROUP-CONTAINING POLYMER NP-3 (S2-2)

### [FIRST STEP: PREPARATION OF POLYETHER POLYOL]

PO was reacted by using a potassium hydroxide (KOH) catalyst by using, as an initiator, a polyoxypropylene diol having an average hydroxy value of 280.5 mgKOH/g obtained by ring-opening polymerization of dipropylene glycol with PO to obtain a polyoxypropylene polyol (D-8000-0; polyol b) having an average hydroxy value of 14.0 mgKOH/g.

### [SECOND STEP: PREPARATION OF TERMINAL ISOCYANATE GROUP POLYETHER COMPOUND]

To a four-necked flask equipped with a stirrer, a nitrogen-introducing tube, a thermometer and a dropping funnel, 1,000 g of the obtained polyol b was put, followed by dehydration under reduced pressure at 120°C, whereupon the water content in the polyol was confirmed to be at most 200 ppm. Then, the temperature was decreased to 85°C, DBTDL (dibutyltin dilaurate) was added so that its amount would be 25 ppm, and then isophorone diisocyanate (IPDI) was added so that the NCO/OH molar ratio would be 2.0, followed by reaction at 85°C for 5 hours to obtain a terminal isocyanate group oxypropylene polymer (urethane prepolymer) having a concentration (NCO mass%) of isocyanate groups of 0.9 mass%.

### [THIRD STEP: INTRODUCTION OF SILYL GROUP]

3-aminopropyltrimethoxysilane (KBM-903 manufactured by Shin-Etsu Chemical Co., Ltd.) corresponding to 1.05 equivalent to NCO groups of the obtained urethane prepolymer was added. The molar ratio represented by NCO/NHR is about 0.95. The reaction was carried out until a peak of NCO disappeared as confirmed by IR (infrared absorption spectroscopy) to obtain an oxyalkylene polymer (NP-3) having trimethoxysilyl groups. The viscosity of (NP-3) was 102,000 mPa·s/25°C.

### PREPARATION EXAMPLE 3: PREPARATION OF POLYETHER TYPE SILYL GROUP-CONTAINING POLYMER NP-4 (S2-3)

### [FIRST STEP]

PO was reacted by using a KOH catalyst by using, as an initiator, a polyoxypropylene diol having an average hydroxy value of 280.5 mgKOH/g obtained by ring-opening polymerization of dipropylene glycol with PO to obtain a polyoxypropylene polyol (D-7000-0; polyol a) having an average hydroxy value of 16.0 mgKOH/g.

### [SECOND STEP] and [THIRD STEP]

In the same manner as in Preparation Example 2 except that polyol a was used instead of polyol b to obtain an oxyalkylene polymer (NP-4) having trimethoxysilyl groups. The viscosity of (NP-4) was 90,000 mPa·s/25°C.

### PREPARATION EXAMPLE 4: PREPARATION OF POLYETHER TYPE SILYL GROUP-CONTAINING POLYMER NP-5 (S2-4)

### [FIRST STEP]

Polyol b was prepared in the same manner as in the first step in Preparation Example 2.

### [SECOND STEP: PREPARATION OF TERMINAL AMINO GROUP POLYETHER COMPOUND]

To a four-necked flask equipped with a stirrer, a nitrogen-introducing tube, a thermometer and a dropping funnel, 1,000 g of the obtained polyol b was put, followed by dehydration under reduced pressure at 120°C, whereupon the water content in the polyol was confirmed to be at most 200 ppm. Then, the temperature was decreased to 85°C, and DBTDL was added so that its amount would be 25 ppm, and isophorone diisocyanate (IPDI) was added so that the NCO/OH molar ratio would be 2.0, followed by reaction at 85°C for 5 hours to obtain a terminal isocyanate group oxypropylene polymer (urethane prepolymer) having a concentration (NCO mass%) of isocyanate groups of 0.9 mass%.

Isophoronediamine corresponding to 1.05 equivalent to NCO groups of the obtained urethane prepolymer was added. The molar ratio represented by NCO/NHR is about 1.05. The reaction was carried out until a peak of NCO disappeared as confirmed by IR.

### [THIRE STEP: INTRODUCTION OF SILYL GROUP]

3-glycidoxypropyltrimethoxysilane (manufactured by Shin-Etsu Chemical Co., Ltd., KBM-403) corresponding to 1.0 equivalent to the added isophoronediamine was added, and ethyl acetate was added so that the solid content would be 50 mass% to obtain an ethyl acetate solution (NP-5) containing 50 mass% (solid content concentration) of an oxyalkylene polymer having trimethoxysilyl groups. The viscosity was 4,000 mPa·s/25°C.

### PREPARATION EXAMPLE 5: PREPARATION OF POLYETHER TYPE SILYL GROUP-CONTAINING POLYMER NP-6 (S2-5)

### [FIRST STEP]

Into a 10 L stainless steel pressure resistant reactor equipped with a stirrer, 800 g of a polyoxypropylene diol (average hydroxy value: 112 mgKOH/g) as an initiator and a TBA-DMC catalyst as a polymerization catalyst were introduced. The amount of TBA-DMC catalyst was 50 ppm to the finish mass. After replacing the interior of the reactor with nitrogen, the temperature was raised to 140°C, and 80 g of PO was introduced into the reactor with stirring and reacted. This is a step to activate the TBA-DMC catalyst by initially supplying a small amount of PO. Then, after the pressure in the reactor decreased, 7,120 g of PO was supplied with stirring and stirred for 11 hours while maintaining the stirring rate at 500 rpm and maintaining the temperature in the reactor at 140°C thereby to let the polymerization reaction proceed, thereby to obtain a polyol (D-10000-0, polyol d) having an average hydroxy value of 11.2 mgKOH/g.

### [SECOND STEP: PREPARATION OF TERMINAL ACRYLOYL GROUP POLYETHER COMPOUND]

To a four-necked flask equipped with a stirrer, a nitrogen-introducing tube, a thermometer and a dropping funnel, 950.8 g of the obtained polyol d was put, followed by dehydration under reduced pressure at 120°C, whereupon the water content in the polyol was confirmed to be at most 200 ppm. Then, the temperature was decreased to 85°C, and DBTDL was added so that its amount would be 25 ppm, and then toluene diisocyanate (TDI) was added so that the NCO/OH molar ratio would be 2.0, followed by reaction at 85°C for 5 hours to obtain a terminal isocyanate group oxypropylene polymer (urethane prepolymer) having a concentration (NCO mass%) of isocyanate groups of 0.8 mass%. Further, hydroxyethyl acrylate was added so that the NCO/OH molar ratio would be 0.98, followed by reaction at 80°C for 5 hours. Disappearance of a peak of NCO was confirmed by IR, and a terminal acryloyl group oxypropylene polymer was obtained.

### [THIRE STEP: INTRODUCTION OF SILYL GROUP]

3-aminopropyltrimethoxysilane (KBM-903, manufactured by Shin-Etsu Chemical Co., Ltd.) in an amount equimolar to hydroxyethyl acrylate used for preparation of the obtained terminal acryloyl group polyether compound was added, followed by reaction at 60°C for 8 hours. Then, disappearance of a peak of a double bond in the vicinity of 6 ppm was confirmed by ¹H-NMR (¹H nuclear magnetic resonance), and an oxyalkylene polymer (NP-6) having trimethoxysilyl groups was obtained. The viscosity of the obtained polymer was 30,000 mPa·s/25°C.

### PREPARATION EXAMPLE 6: PREPARATION OF POLYESTER ETHER TYPE SILYL GROUP-CONTAINING POLYMER NP-7 (S1-1)

### [FIRST STEP]

Into a 10 L stainless steel pressure resistant reactor equipped with a stirrer, 2,800 g of a polyoxypropylene diol (hydroxy group-based molecular weight: 700) as an initiator and a TBA-DMC catalyst as a polymerization catalyst were introduced. The amount of TBA-DMC catalyst was 50 ppm to the finish mass i.e. 50 ppm as the metal amount in the polymer upon completion of the first step.

After replacing the interior of the reactor with nitrogen, the temperature was raised to 140°C, and 280 g of PO was introduced into the reactor with stirring and reacted. This is a step to activate the TBA-DMC catalyst by initially supplying a small amount of PO.

Then, after the pressure in the reactor decreased, 1,640 g of PO and 3,280 g of caprolactone (CL) were introduced into the reactor at constant rates, respectively, with stirring, so that the supply amounts per unit time would be PO/CL=1/2 by mass ratio. After completion of the introduction of PO and CL, the stirring was continued for further 1 hour. During that, the temperature in the reactor was maintained to be 140°C, and the stirring speed was maintained to be 500 rpm to let the polymerization reaction proceed, thereby to obtain a polyester ether polyol.

The obtained polyol A was confirmed to have random copolymer chains of CL and PO from the results of measurement of ¹³C-NMR. This polyol had an average hydroxy value of 56.1 mgKOH/g.

The content of the bivalent group (A) derived from CL, in the obtained polyol, was 41 mass%. Further, the content of the random copolymer chains of CL and PO in the polyol was 61.5 mass%.

### [SECOND STEP: PREPARATION OF POLYESTER ETHER PREPOLYMER COMPOUND]

To a four-necked flask equipped with a stirrer, a nitrogen-introducing tube, a thermometer and a dropping funnel, 1,000 g of the obtained polyol was put, followed by dehydration under reduced pressure at 120°C, whereupon the water content in the polyol was confirmed to be at most 200 ppm. Then, the temperature was decreased to 85°C, and DBTDL was added so that its amount would be 25 ppm, and then toluene diisocyanate (TDI) was added so that the NCO/OH molar ratio would be 2.0, followed by reaction at 85°C for 3 hours to obtain a terminal isocyanate group oxypropylene polymer

(urethane prepolymer) having a concentration (NCO mass%) of isocyanate groups of 3.5 mass%.

### [THIRE STEP: INTRODUCTION OF SILYL GROUP]

Aminopropyltrimethoxysilane (manufactured by Shin-Etsu Chemical Co., Ltd., KBM903) corresponding to 1.02 equivalent to the NCO% (3.5) of the obtained urethane prepolymer was added, followed by reaction at 85°C. Disappearance of a peak of NCO was confirmed by IR, and an oxyalkylene polymer (NP-7) having trimethoxysilyl groups was obtained. The viscosity of the obtained polymer was 90,000 mPa·s/25°C.

The obtained polymer was adjusted to have a solid content concentration of 50% by methanol to be used for preparation of a pressure sensitive adhesive sheet.

### COMPARATIVE PREPARATION EXAMPLE 1: PREPARATION OF ANOTHER SILYL GROUP-CONTAINING POLYMER NP-1 (S4-1)

A polymerization reaction was carried out under a condition of 120°C while gradually adding 2,480 g of PO into a reactor in the presence of 1.2 g of a zinc hexacyanocobaltate-glyme complex catalyst by using, as an initiator, a mixture of 120 g of a polyoxypropylene diol (hereinafter referred to as diol 4A) having Mn=3000 obtained by ring-opening polymerization of dipropylene glycol with PO and 200 g of a polyoxypropylene triol (hereinafter referred to as triol 4B) having Mn=5000 obtained by ring-opening polymerization of glycerol with PO, and after adding the entire amount of PO, the reaction was carried out until the internal pressure of the reactor no longer decreased.

Then, 120 g of diol 4A and 200 g of triol 4B were introduced into the reactor, and in the same manner as above, 1,680 g of PO was gradually added and then the reaction was carried out until the internal pressure of the reactor no longer decreased. Further, 120 g of diol 4A and 200 g of triol 4B were introduced into the reactor, and in the same manner as above, 1,280 g of PO was gradually added and then the reaction was carried out until the internal pressure of the reactor no longer decreased. Further, 80 g of diol 4A and 130 g of triol 4B were introduced into the reactor, and in the same manner as above, 590 g of PO was gradually added, and then the reaction was carried out until the internal pressure of the reactor no longer decreased

Further, 60 g of diol 4A and 100 g of triol 4B were added, and in the same manner as above, 240 g of PO was gradually added, and then, the reaction was carried out until the internal pressure of the reactor no longer decreased.

Finally, 75 of diol 4A and 125 g of triol 4B were added, and in the same manner as above, 200 g of PO was gradually added, and then, the reaction was carried out until the internal pressure of the reactor no longer decreased. By this operation, a polyoxypropylene polyol F having Mn of 17000 and Mw/Mn of 1.76 was obtained.

To the obtained polyoxypropylene polyol F, a methanol solution of sodium methoxide corresponding to 1.05 equivalent to hydroxy groups of polyol F, was added, and methanol was distilled off under reduced pressure under heating to convert terminal hydroxy groups of the polyoxypropylene polyol to sodium alkoxide. Then, 1.5 equivalent of allyl chloride was reacted therewith, and then unreacted allyl chloride was removed, and further, a by-product salt was removed, to obtain a polyoxypropylene having terminal allyl groups. Further, methyldimethoxysilane was reacted with the polyoxypropylene in the presence of a platinum catalyst to obtain a polyoxypropylene polymer (NP-1) having methyl dimethoxysilyl groups at the terminals.

The obtained polymer (NP-1) had Mn of 20,000, Mw/Mn of 1.35 and a viscosity of 19,500 mPa·s/25°C.

### COMPARATIVE PREPARATION EXAMPLE 2: PREPARATION OF ACRYLIC RESIN PRESSURE SENSITIVE ADHESIVE A1

To a four-necked flask equipped with a stirrer, a reflux condenser, a nitrogen-introducing tube, a thermometer and a dropping funnel, 37.5 parts by mass of ethyl acetate was charged. Further, 100 parts by mass of 2-ethylhexyl acrylate was charged to another container. 25 Parts by mass of the 2-ethylhexyl acrylate in the container was added to the four-necked flask, and the air in the flask was replaced with a nitrogen gas. Then, 0.08 part by mass of azobisisobutyronitrile (AIBN) as a polymerization initiator was added, and the temperature in the flask was increased to 80°C in a nitrogen atmosphere with stirring to carry out an initial reaction for about 20 minutes. Heating was further continued, and reaction was carried out under reflux while successively adding a mixture comprising 75 parts by mass of the remaining 2-ethylhexyl acrylate, 32.5 parts by mass of ethyl acetate and 0.24 part by mass of AIBN over a period of about 1.5 hours. Further, the reaction was continued while maintaining the temperature in a reflux state for 1.5 hours. Then, a solution having 0.25 part by mass of AIBN dissolved in 25 parts by mass of ethyl acetate was dropwise added in a reflux state over a period of 30 minutes, followed by reaction further for 2 hours. After completion of the reaction, the obtained reaction mixture was diluted with 35 parts by mass of ethyl acetate and 20 parts by mass of tert-butyl alcohol to obtain an acrylic resin pressure sensitive adhesive A1 comprising an acrylic resin solution having a solid content concentration of 40.1 mass%. In the obtained acrylic resin pressure sensitive adhesive A1, the mass average molecular weight (Mw) of the acrylic resin was 550,000. The mass average molecular weight is a value as calculated as polystyrene obtained by measurement by gel permeation chromatography.

### EXAMPLES 1 to 6 and COMPARATIVE EXAMPLES 1 and 2

Each of silyl group-containing polymers (NP-1 to NP-7) obtained in Preparation Examples 1 to 6 and Comparative Preparation Example 1 and acrylic resin pressure sensitive adhesive A1 obtained in Comparative Preparation Example 2 was applied on a PET film (substrate) having a thickness of 100 µm so that the layer thickness after drying would be 150 µm, and dried at 100°C for 5 minutes in a circulation system oven. Then, after aging at 23°C for one week, it was left to stand at 23°C under a relative humidity of 65% for 2 hours to form an adherence substance layer thereby to obtain a pressure sensitive adhesive sheet.

### (EVALUATION METHODS)

The peel strength was measured, and the adhesion and the wettability were evaluated by the following methods. The results are shown in Tables 1 and 2. In Tables 1 and 2, the main composition and the viscosity of the silyl group-containing polymer used in each Example are also shown.

### [PEEL STRENGTH]

The obtained pressure sensitive adhesive sheet was bonded to a stainless steel plate treated by bright annealing, having a thickness of 1.5 mm, at room temperature and press-bonded by a rubber roll of 2 kg. Upon expiration of 30 minutes, one day, 7 days, 14 days and 28 days, the peel strength (180° peel at a tension speed of 300 mm/min) was measured by using a tensile tester (RTE-1210, manufactured by ORIENTEC CO., LTD) prescribed in JIS B7721. It is shown the smaller this value, the lower the adhesive strength and the easier the peeling, and the more excellent the removability. In Tables, "floating" means a state where the adherence substance layer of the pressure sensitive adhesive sheet did not adhere to the stainless steel plate as an adherend and floated above the adherend.

Further, the ratio of the peel strength (672 hours/30 minutes) upon expiration of 28 days (672 hours) based on the peel strength upon expiration of 30 minutes is shown in Tables 1 and 2. The higher this value, the larger the increase of the adhesive strength with time.

### [ADHESION]

The pressure sensitive adhesive sheet was bonded to a stainless steel plate treated by bright annealing and then left to stand at 23°C under a relative humidity of 65% for 30 minutes, and then peeled, whereupon the residual adhesive was visually evaluated. By the visual evaluation, one where no transfer of the adhesive to the stainless steel plate was observed was judged to be ○ (good), one where transfer of the adhesive was partially observed, was judged to be △ (slightly good), and one where the adhesive was transferred completely was judged to be × (no good).

No transfer of the adhesive to the stainless steel plate observed means that the adhesion of the substrate to the adherence substance layer in the pressure sensitive adhesive sheet is good, the adherence substance layer is easily separated from the stainless steel plate as an adherend, and the adherence substance layer is hardly separated from the substrate.

### [WETTABILITY]

The pressure sensitive adhesive sheet was placed at 23°C on a stainless steel plate treated by bright annealing so that the adhesive surface of 25 mm × 100 mm faced down, and left at rest for 3 minutes, whereupon the wet area was visually evaluated. A case where the entire adhesive surface was wet was evaluated to be "O", a case where two thirds of the adhesive surface was wet was evaluated to be "N1", a case where half the adhesive surface was wet was evaluated to be "N2", and one third or less of the adhesive surface was wet was evaluated to be "N3", and N1 to N3 were regarded unsuitable.

**TABLE 1**

| | | Comp. Ex. 1 | Ex. 1 | Ex. 2 | Ex. 3 |
|---|---|---|---|---|---|
| Silyl group-containing polymer | | NP-1 (Comp. Prep. Ex.) | NP-2 (Prep. Ex.1) | NP-3 (Prep. Ex. 2) | NP-4 (Prep. Ex. 3) |
| Polyol obtained in first step | | | G-17000-0 | D-8000-0 | D-7000-0 |
| Polyol terminal group before reaction with silyl compound | | Allyl group | Allyl group | NCO group | NCO group |
| Silyl compound | | Silylhydro compound | Silylmercapto compound | Silylamino compound | Silylamino compound |
| Viscosity (mPa·s/25°C) | | 19500 | 20000 | 102000 | 90000 |
| Peel strength (N/25 mm) | 30 minutes later | 0.23 | 0.07 | 0.17 | 0.16 |
| | 24 hours (1 day) later | 0.56 | 0.07 | 0.17 | 0.19 |
| | 168 hours (7 days) later | Floating | 0.10 | 0.17 | 0.20 |
| | 336 hours (14 days) later | Floating | 0.13 | 0.17 | 0.28 |
| | 672 hours (28 days) later | Floating | 0.19 | 0.16 | 0.24 |
| Ratio of peel strength (672 hours/30 minutes) | | - | 2.7 | 0.9 | 1.5 |
| Adhesion to substrate | | × | ○ | ○ | ○ |
| Wettability | | ○ | ○ | ○ | ○ |

**TABLE 2**

| | | Ex. 4 | Ex. 5 | Ex. 6 | Comp. Ex. 2 |
|---|---|---|---|---|---|
| Silyl group-containing polymer | | NP-5 (Prep. Ex. 4) | NP-6 (Prep. Ex. 5) | NP-₇ (Prep. Ex. 6) | Acrylic resign pressure sensitive adhesive (Comp. Prep. Ex. 2) |
| Polyol obtained in first step | | D-8000-0 | D-10000-0 | Ester ether polyol | |
| Polyol terminal group before reaction with silyl compound reaction | | Amino group | Acryloyl group | NCO group | |
| Silyl compound | | Epoxysilyl compound | Silylamino compound | Silylamino compound | |
| Viscosity (mPa·s/25°C) | | 4000 (50% solid content) | 30000 | 90000 | |
| Peel strength (N/25 mm) | 30 minutes later | 3.00 | 1.50 | 0.30 | 0.20 |
| | 24 hours (1 day) later | 3.00 | 2.90 | 0.30 | 0.30 |
| | 168 hours (7 days) later | 4.00 | 3.00 | 0.30 | 0.40 |
| | 336 hours (14 days) later | 5.00 | 3.70 | 0.40 | 0.50 |
| | 672 hours (28 days) later | 5.50 | 4.00 | 0.50 | 0.70 |
| Ratio of peel strength (672 hours/30 minutes) | | 1.8 | 2.7 | 1.3 | 3.5 |
| Adhesion to substrate | | ○ | ○ | ○ | ○ |
| Wettability | | ○ | ○ | ○ | N3 |

As evident from results in Tables 1 and 2, in Example 1 wherein the silyl group-containing polymer (S) had a bonding group Q3, in Examples 2, 3 and 6 wherein it had a bonding group Q1, and in Example 5 wherein it had a bonding group Q6, the silyl group-containing polymer (S) had a low viscosity. Further, the silyl group-containing polymer (S) could be applied on a substrate without addition of a solvent, and a pressure sensitive adhesive sheet could be formed by curing it. In Example 4 wherein the silyl group-containing polymer (S) had a bonding group Q7, a solvent was added, however, in all of Examples 1 to 6, the obtained pressure sensitive adhesive sheet had low adhesive strength and favorable removability, whereas the increase in the adhesive strength with time was small, and favorable adhesion to an adherend was maintained even as time passed. Further, the wettability to an adherend was also favorable.

Whereas the silyl group-containing polymer in Comparative Example 1 having a bonding group formed by reacting the terminal allyl group with a hydrosilane compound instead of the bonding group Q had a low viscosity and could be applied without solvent, but an adherence substance obtained by curing it was peeled from the substrate as time passed.

Further, the acrylic resin pressure sensitive adhesive A1 in Comparative Example 2 undergoes a remarkable increase in the adhesive strength with time and does not have good wettability.

### INDUSTRIAL APPLICABILITY

By using the adherence substance of the present invention, it is possible to obtain a pressure sensitive adhesive sheet which provides particularly good wettability and adhesion to an adherend and which at the same time has a low adhesive strength and is excellent in removability, which has a peel electrostatic charge suppressed and which is excellent also in a high speed peeling property.

The pressure sensitive adhesive sheet of the present invention is useful e.g. for a protective sheet for electronic materials such as electronic substrates, IC chips, etc. and a protective sheet for optical components such as prism sheets, etc.

The entire disclosures of Japanese Patent Application No. 2008-193830 filed on July 28, 2008 and Japanese Patent Application No. 2008-258750 filed on October 3, 2008 including specifications, claims, drawings and summaries are incorporated herein by reference in their entireties.

## Claims

1. An adherence substance which is obtainable by curing a curable composition comprising a silyl group-containing polymer (S) represented by the following formula (1) and which has a peel adhesive strength of at most 8 N/25mm: 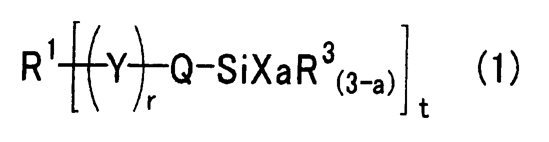 in the formula (1), R¹ represents a t-valent residue obtained by removing all hydroxy groups from a compound having t pieces of hydroxy groups in one molecule; Q represents a bivalent group represented by any one of the following formulae (Q1) to (Q10); R³ represents a monovalent organic group having from 1 to 20 carbon atoms; X represents a hydroxy group or a hydrolyzable group; Y represents a bivalent group represented by the following formula (A) or a bivalent group represented by the following formula (B); a represents an integer of from 1 to 3; r represents an integer of from 1 to 1,000; t represents an integer of from 1 to 8; when t is from 2 to 8, t pieces of monovalent groups (-(Y)ᵣ-Q-SiXₐR³₍₃₋ₐ₎) bonded to R¹ may be the same or different from one another; when a is 2 or 3, 2 or 3 pieces of X bonded to one silicon atom may be the same or different from one another; when a is 1, 2 pieces of R³ bonded to one silicon atom may be the same or different from each other; and when r is 2 or more, the plurality of Y bonded to one another, may be the same or different from one another; 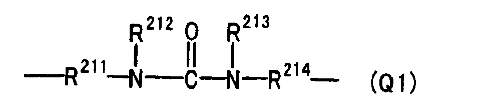 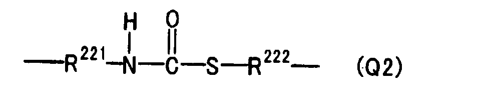
-R²³¹-S-R²³²- (Q3) 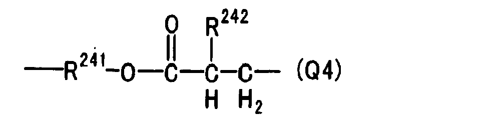 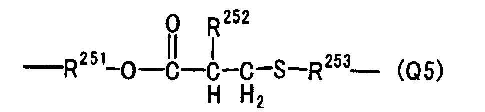 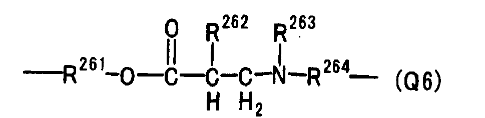 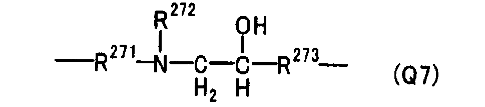 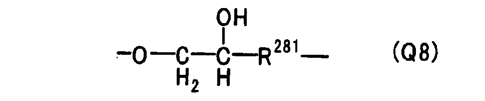 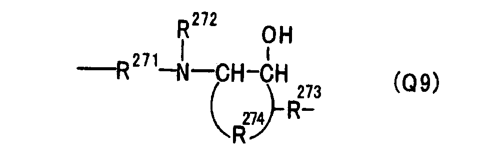 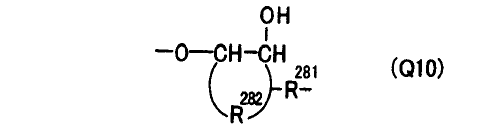
in the formulae (Q1) to (Q10), each of R²¹¹, R²¹⁴, R²²¹, R²²², R²³¹, R²³², R²⁴¹, R²⁵¹, R²⁵³, R²⁶¹, R²⁶⁴, R²⁷¹, R²⁷³ and R²⁸¹ which are independent of one another, represents a single bond or a bivalent group, each of R²¹², R²¹³, R²⁶³ and R²⁷² which are independent of one another, represents a hydrogen atom or a monovalent organic group having from 1 to 8 carbon atoms, each of R²⁴², R²⁵² and R²⁶² which are independent of one another, represents a hydrogen atom or a methyl group, and each of R²⁷⁴ and R²⁸² which are independent of each other, represents a trivalent organic group; 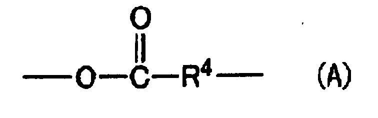
-OR⁵- (B)
in the formula (A), R⁴ represents an alkylene group having from 2 to 8 carbon atoms; and in the formula (B), R⁵ represents an alkylene group having from 2 to 4 carbon atoms.

2. The adherence substance according to Claim 1, wherein the curable composition comprises, as the silyl group-containing polymer (S), a polyester ether type silyl group-containing polymer (S1) which is represented by the above formula (1) wherein r is an integer of from 2 to 1,000, and Y is a bivalent group represented by the formula (A) and a bivalent group represented by the formula (B).

3. The adherence substance according to Claim 2, wherein the polyester ether type silyl group-containing polymer (S1) is a polymer obtainable via a first step of reacting an initiator (z) made of a compound having from 1 to 8 hydroxy groups in the molecule, a cyclic ester compound (a) having from 3 to 9 carbon atoms and an alkylene oxide (b) having from 2 to 4 carbon atoms in the presence of a polymerization catalyst to obtain a polyester ether poly(mono)ol (p1), a second step of introducing a connecting moiety to the terminal of the polyester ether poly(mono)ol (p1) to obtain a substituted polyester ether compound (p11), and a third step of reacting the substituted polyester ether compound (p11) with a silyl compound (I) to obtain the polyester ether type silyl group-containing polymer (S1).

4. The adherence substance according to Claim 3, wherein in the polyester ether type silyl group-containing polymer (S1), the mass ratio of the bivalent group represented by the formula (A) derived from the cyclic ester compound (a) to the bivalent group represented by the formula (B) derived from the alkylene oxide (b) i.e. (A):(B), is from 5:95 to 95:5.

5. The adherence substance according to Claim 3 or 4, wherein the initiator (z) is a polyoxyalkylene poly(mono)ol (z2) which has from 1 to 8 hydroxy groups in the molecule and which also has an oxyalkylene group, and the polyester ether type silyl group-containing polymer (S1) is a polymer represented by the following formula (2): 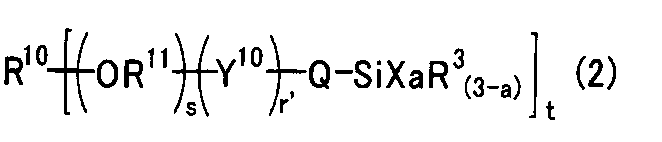 in the formula (2), R¹⁰ represents a t-valent hydrocarbon group having from 1 to 20 carbon atoms; R¹¹ represents an alkylene group having from 2 to 4 carbon atoms derived from the polyoxyalkylene poly(mono)ol (z2); Q represents a bivalent group represented by any one of the formulae (Q1) to (Q10) as defined for the above formula (1) ; R³ represents a monovalent organic group having from 1 to 20 carbon atoms; X represents a hydroxy group or a hydrolyzable group; Y¹⁰ represents a bivalent group
represented by the following formula (A) derived from the cyclic ester compound (a) or a bivalent group represented by the following formula (B) derived from the alkylene oxide (b), Y¹⁰ contains at least a bivalent group represented by the formula (A); a represents an integer of from 1 to 3; r' represents an integer of at least 1; s represents an integer of from 1 to 250; the sum of r' and s is an integer of from 2 to 1,000; t represents an integer of from 1 to 8; when t is from 2 to 8, t pieces of monovalent groups (-(OR¹¹)ₛ-(Y¹⁰)_{r'}-Q-SiXₐR³₍₃₋ₐ₎) bonded to R¹⁰ may be the same or different from one another; when a is 2 or 3, 2 or 3 pieces of X bonded to one silicon atom may be the same or different from one another; when a is 1, 2 pieces of R³ bonded to one silicon atom may be the same or different from each other; when r' is 2 or more, the plurality of Y¹⁰ bonded to one another, may be the same or different from one another; and when s is 2 or more, the plurality of -OR¹¹- bonded to one another, may be the same or different from one another; 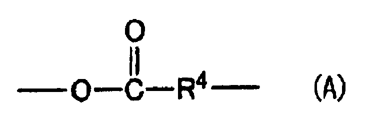
-OR⁵- (B)
in the formula (A), R⁴ represents an alkylene group having from 2 to 8 carbon atoms; and in the formula (B), R⁵ represents an alkylene group having from 2 to 4 carbon atoms.

6. The adherence substance according to any one of Claims 3 to 5, wherein the polyester ether poly(mono)ol (p1) has an average hydroxy value (OHV) of from 10 to 230 mgKOH/g.

7. An adherence substance which is obtainable by curing a curable composition comprising a silyl group-containing polymer (S) represented by the following formula (1): 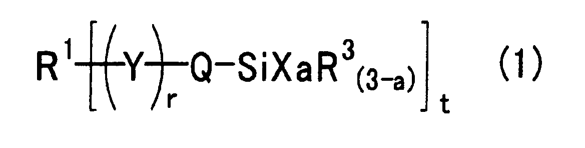 in the formula (1), R¹ represents a t-valent residue obtained by removing all hydroxy groups from a compound having t pieces of hydroxy groups in one molecule; Q represents a bivalent group represented by any one of the following formulae (Q1) to (Q10); R³ represents a monovalent organic group having from 1 to 20 carbon atoms; X represents a hydroxy group or a hydrolyzable group; Y represents a combination of a bivalent group represented by the following formula (A) and a bivalent group represented by the following formula (B); a represents an integer of from 1 to 3; r represents an integer of from 2 to 1,000; t represents an integer of from 1 to 8; when t is from 2 to 8, t pieces of monovalent groups (-(Y)ᵣ-Q-SiXₐR³₍₃₋ₐ₎) bonded to R¹ may be the same or different from one another; when a is 2 or 3, 2 or 3 pieces of X bonded to one silicon atom may be the same or different from one another; when a is 1, 2 pieces of R³ bonded to one silicon atom may be the same or different from each other; and the
plurality of Y bonded to one another, may be the same or different from one another; 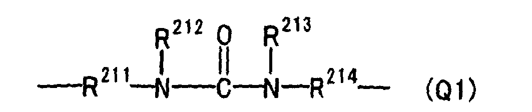 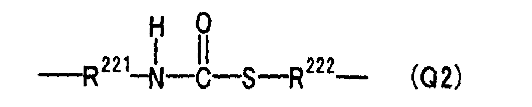
-R²³¹-S-R²³²- (Q3) 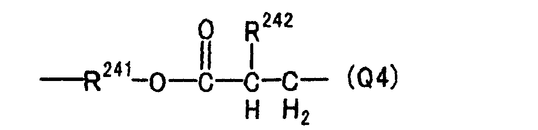 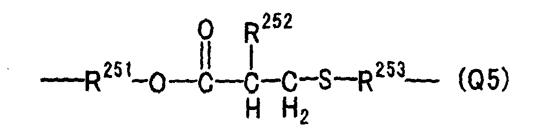 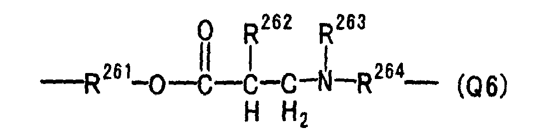 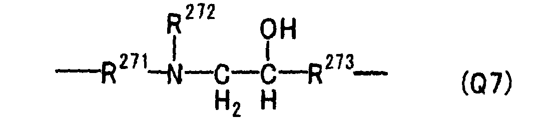 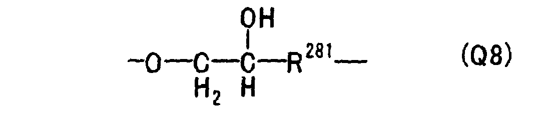 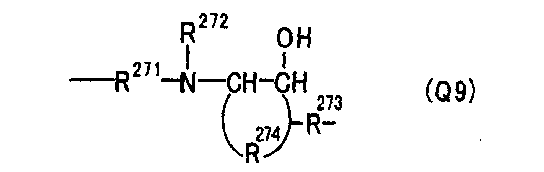 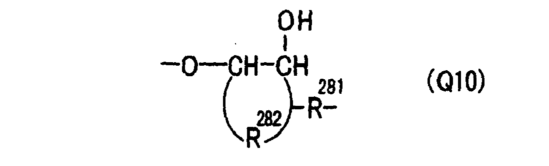
in the formulae (Q1) to (Q10), each of R²¹¹, R²¹⁴, R²²¹, R²²², R²³¹, R²³², R²⁴¹, R²⁵¹, R²⁵³, R²⁶¹, R²⁶⁴, R²⁷¹, R²⁷³ and R²⁸¹ which are independent of one another, represents a single bond or a bivalent group, each of R²¹², R²¹³, R²⁶³ and R²⁷² which are independent of one another, represents a hydrogen atom or a monovalent organic group having from 1 to 8 carbon atoms, each of R²⁴², R²⁵² and R²⁶² which are independent of one another, represents a hydrogen atom or a methyl group, and each of R²⁷⁴ and R²⁸² which are independent of each other, represents a trivalent organic group; 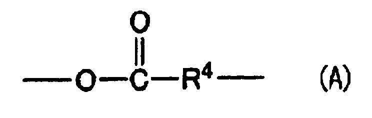
-OR⁵- (B)
in the formula (A), R⁴ represents an alkylene group having from 2 to 8 carbon atoms; and in the formula (B), R⁵ represents an alkylene group having from 2 to 4 carbon atoms.

8. A pressure sensitive adhesive sheet comprising a substrate layer and at least one layer of an adherence substance, wherein the adherence substance is one as defined in any one of Claims 1 to 7.

9. A backgrind tape comprising a substrate layer and at least one layer of an adherence substance, wherein the adherence substance is one as defined in any one of Claims 1 to 7.

10. An optical element protective pressure sensitive adhesive sheet comprising a substrate layer and at least one layer of an adherence substance, wherein the adherence substance is one as defined in any one of Claims 1 to 7.

11. An optical element having the optical element protective pressure sensitive adhesive sheet as defined in Claim 10 bonded thereon.

12. A light diffusing plate comprising the optical element as defined in Claim 11.

13. A prism sheet comprising the optical element as defined in Claim 11.
